# EUROPEAN PATENT APPLICATION

(11) **EP 4 300 631 A1**
(43) Date of publication of application: **03.01.2024**
(21) Application number: 22914425.8
(22) Date of filing: 20.12.2022
(51) Int. Cl.: H01M 4/48, H01M 4/62

(54) **NEGATIVE ELECTRODE MATERIAL AND PREPARATION METHOD THEREFOR, AND LITHIUM-ION BATTERY**

(30) Priority: 29.12.2021 CN 202111635594
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: XIE, Wei, Shenzhen, Guangdong 518106 (CN); PANG, Chunlei, Shenzhen, Guangdong 518106 (CN); DENG, Zhiqiang, Shenzhen, Guangdong 518106 (CN); REN, Jianguo, Shenzhen, Guangdong 518106 (CN); HE, Xueqin, Shenzhen, Guangdong 518106 (CN)
(74) Representative: Meroni, Francesca
(86) International application number: PCT/CN2022/140481
(87) International publication number: WO 2023/125171

(57) **Abstract**

The present disclosure relates to a negative electrode material and a preparation method thereof and a lithium ion battery, wherein the negative electrode material comprises an active material, the active material comprises a skeleton structure and a silicon oxygen material embedded on the skeleton structure; the skeleton structure comprises a skeleton of lithium silicate located inside the active material and a skeleton of water-insoluble silicate located on a surface layer of the active material, and the skeleton of water-insoluble silicate is linked with the skeleton of lithium silicate, wherein in an XRD pattern of the negative electrode material, an intensity of a strongest diffraction characteristic peak of the lithium silicate is I_{A}, and an intensity of a strongest diffraction characteristic peak of the water-insoluble silicate is I_{B}, and 0.03≤I_{B}/I_{A}≤0.2. The negative electrode material and the preparation method thereof in the present disclosure are simple, have low costs, are easy to realize industrial production, and the negative electrode material prepared can improve the processability, have excellent electrochemical cycle and expansion inhibition performances, and can prolong the service lifetime of the lithium ion battery.

## Description

### Cross-reference to Related Application

The present disclosure claims the priority to the Chinese patent application with the filing No. CN202111635594.X filed with the Chinese Patent Office on December 29, 2021, and entitled "Silicon Oxygen Composite Negative Electrode Material and Preparation Method thereof and Lithium Ion Battery", the contents of which are incorporated herein by reference in entirety.

### Technical Field

The present disclosure relates to the field of lithium ion batteries, and relates to a negative electrode material and a preparation method thereof and a lithium ion battery.

### Background Art

The silicon monoxide material is an indispensable negative electrode material in the development of a new generation of ultra-large-capacity lithium ion batteries. The research and layout of developing silicon-based lithium ion batteries in the industry of silicon monoxide have been more than ten years, but silicon-based materials represented by silicon monoxide have not been used in large scale. The main factors restricting application of silicon-based materials are natural disadvantages of the silicon-based materials themselves. High expansion, violent volume change, and low first efficiency and rate are all problems to be solved urgently at present. Metal doping of a silicon-based inner core is one of the most direct improvement schemes for improving first efficiency of silicon-based negative electrode material. By doping a reducing metal, inactive silicate is formed, so as to avoid reaction of active lithium with oxygen to form inactive lithium silicate in a process of intercalating lithium, and improve the first efficiency of silicon oxygen material. For the selection of the doped metal, it is required to have certain reducibility, such as Li and Mg. Lithium metal is one of the optimal choices, and as a core active element of the lithium ion battery, after a silicon-based material is pre-lithiated, an inactive material such as lithium silicate of various phases is formed inside. The lithium silicate can be used as a buffer zone in a charging and discharging expansion process, and moreover, due to a high lithium content of interface thereof, the lithium silicate can also be used as fast ion conductor to accelerate rapid transfer of lithium ions inside. No matter in the academia and industry, the pre-lithiation process has been recognized as one of the most efficient solutions for improving the first efficiency of silicon-based materials.

However, on the other hand, the pre-lithiated silicon-based materials also have a lot of problems to be solved urgently. One of the most prominent problems is the problem of gas generation and active silicon loss caused by uncontrolled pH. After the silicon-based material is pre-lithiated, while lithium enters the silicon-based inner core, it will also form strongly alkaline silicate on the surface, as well as other residual bases. However, this ingredient will make a slurry show strong alkalinity during slurry mixing. In a strongly alkaline environment, the silicon-based material will have redox reaction, and release hydrogen gas, and the oxidized active silicon will be lost and become inactive silicon, resulting in a decrease in battery capacity, and the released hydrogen gas will affect electrode plate quality in a slurry coating process.

Therefore, to develop a silicon-based material capable of inhibiting gas generation, improving processability and having excellent cycle performance and a preparation method thereof is still a technical problem in the art.

### Summary

The present disclosure provides a negative electrode material, wherein the negative electrode material includes an active material, the active material includes a skeleton structure that runs throughout the active material and a silicon oxygen material embedded on the skeleton structure; the skeleton structure includes a skeleton of lithium silicate located inside the active material and a skeleton of water-insoluble silicate located on a surface layer of the active material, and the skeleton of water-insoluble silicate is linked with the skeleton of lithium silicate, wherein
in an XRD pattern of the negative electrode material, an intensity of a strongest diffraction characteristic peak of the lithium silicate is I_{A}, and an intensity of a strongest diffraction characteristic peak of the water-insoluble silicate is I_{B}, and 0.03≤I_{B}/I_{A}≤0.2.

The present disclosure further provides a negative electrode material, wherein the negative electrode material includes an active material;
the active material includes lithium silicate, water-insoluble silicate, and a silicon oxygen material, wherein
the water-insoluble silicate is coated on a surface of the lithium silicate; and
the lithium silicate and/or the water-insoluble silicate contains the silicon oxygen material, wherein
in an XRD pattern of the negative electrode material, an intensity of a strongest diffraction characteristic peak of the lithium silicate is I_{A}, and an intensity of a strongest diffraction characteristic peak of the water-insoluble silicate is I_{B}, and 0.03≤I_{B}/I_{A}≤0.2.

Optionally, the silicon oxygen material is SiOₙ, where 0.5≤n≤1.5.

Optionally, the lithium silicate includes at least one of Li₂SiO₃, Li₂Si₂O₅, Li₄SiO₄, Li₂Si₃O₇, Li₈SiO₆, Li₆Si₂O₇, Li₄Si₂O₇, Li₂Si₄O₇, and LiSiO₃.

Optionally, the water-insoluble silicate includes zA₂O▪MO_{y}▪xSiO₂, where M includes at least one of Mg, Al, Ca, Ge, Cr, V, Ti, Sc, Co, Ni, Cu, Sr, Zn, Zr, Fe, and Mn, A includes at least one of Li, Na, and K, 0.2≤x≤10.0, 1.0≤y≤3.0, and 0≤z≤5.0.

Optionally, the water-insoluble silicate further includes A₂O▪nSiO₂, wherein A includes at least one of Li, Na, and K, and 1≤n≤10.

Optionally, a work function range of the water-insoluble silicate is 2.5 eV≤η≤7.0 eV.

Optionally, the water-insoluble silicate is located in a depth region of 20 nm~50 nm of a surface of the active material.

Optionally, a mass content of Li element in the water-insoluble silicate is W₁%, and a content of the Li element in the lithium silicate is W₂%, and W₂>W₁≥0.

Optionally, the negative electrode material further includes a carbon layer existing on a surface of the active material.

Optionally, an average thickness of the carbon layer is 30 nm~500 nm.

Optionally, a tap density of the negative electrode material is 0.6 g/cm³~1.2 g/cm³.

Optionally, a specific surface area of the negative electrode material is 1.00 m²/g~12.0 m²/g.

Optionally, an average particle size of the negative electrode material is 3.0 µm~12.0 µm.

Optionally, a mass percentage content of carbon in the negative electrode material is 1.5 wt%~10.0 wt%.

Optionally, a mass percentage content of lithium in the negative electrode material is 3 wt%~15 wt%.

Optionally, pH of the negative electrode material is 8.5-12.0.

Optionally, in the XRD pattern of the negative electrode material, the intensity of the strongest diffraction characteristic peak of the lithium silicate is I_{A}, and the intensity of the strongest diffraction characteristic peak of the water-insoluble silicate is I_{B}, and 0.12≤I_{B}/I_{A}≤0.18.

Optionally, a content of lithium element in the water-insoluble silicate of the negative electrode material is pm, and a total content of the lithium element in the negative electrode material is p_{Li}, where 0.01≤pm/p_{Li}≤0.6.

The present disclosure further provides a preparation method of a negative electrode material, including steps of:
performing a surface etching treatment on a pre-lithiated silicon oxygen material; and
mixing the silicon oxygen material having undergone the surface etching treatment with a metal M- and/or metal A-containing substance, and performing a solid-phase thermal reaction under a protective atmosphere, to obtain the negative electrode material.

Optionally, the metal A-containing substance includes at least one of an elemental metal A, a carbonate of metal A, an oxide of metal A, and a hydroxide of metal A, wherein A includes at least one of Li, Na, and K.

Optionally, the metal M-containing substance includes at least one of an elemental metal M, a carbonate of metal M, an oxide of metal M, and a hydroxide of metal M, where M includes at least one of Mg, Al, Ca, Ge, Cr, Pb, Sr, Zn, Zr, Fe, and Mn.

Optionally, a mass ratio of the silicon oxygen material having undergone the surface etching treatment to the metal M- and/or metal-A containing substance is 1 :(0.01 ~0.1).

Optionally, a mass ratio of the silicon oxygen material having undergone the surface etching treatment to the metal M- and/or metal-A containing substance is 1 :(0.075~0.1).

The present disclosure further provides a preparation method of a negative electrode material, including steps of:
performing a surface etching treatment on a pre-lithiated silicon oxygen material; and
mixing the silicon oxygen material having undergone the surface etching treatment with a metal M-containing compound, and performing a solid-phase thermal reaction under a protective atmosphere, to obtain the negative electrode material.

Optionally, the metal M-containing compound includes at least one of a carbonate of metal M, an oxide of metal M, and a hydroxide of metal M, where M includes at least one of Mg, Al, Ca, Ge, Cr, Pb, Sr, Zn, Zr, Fe, and Mn.

Optionally, a mass ratio of the silicon oxygen material having undergone the surface etching treatment to the metal M-containing compound is 1 :(0.01 ~0.1).

Optionally, a mass ratio of the silicon oxygen material having undergone the surface etching treatment to the metal M-containing compound is 1:(0.075~0.1).

Optionally, the metal M-containing compound is an oxide of metal M.

Optionally, the mixing manner includes at least one of mechanical stirring, ultrasonic dispersion, and grinding dispersion.

Optionally, the mixing manner is ball milling and mixing, and ball milling time is 3 h~24 h.

Optionally, a gas of the protective atmosphere includes at least one of nitrogen gas, helium gas, neon gas, argon gas, krypton gas, and xenon gas.

Optionally, a temperature of the solid-phase thermal reaction is 600 ºC∼1200 ºC.

Optionally, time of the solid-phase thermal reaction is 3 h~12.

Optionally, a heating rate of the solid-phase thermal reaction is 1 ºC/min~5 ºC/min.

Optionally, the pre-lithiated silicon oxygen material is a pre-lithiated carbon-coated silicon oxygen material.

Optionally, the pre-lithiated carbon-coated silicon oxygen material is obtained by reaction of the carbon-coated silicon oxygen material with a lithium source.

Optionally, the silicon oxygen material is SiOₙ, where 0.5≤n≤1.5.

Optionally, an average particle size (D₅₀) of the silicon oxygen material is 2.0 µm-15.0 µm.

Optionally, a thickness of the carbon layer on a surface of the carbon-coated silicon oxygen material is 30 nm~500 nm.

Optionally, the lithium source includes at least one of elemental lithium or a lithium-containing compound.

Optionally, the lithium source includes at least one of lithium hydride, lithium alkyl, lithium metal, lithium aluminum hydride, lithium amide, and lithium borohydride.

Optionally, a reaction temperature of the carbon-coated silicon oxygen material and the lithium source is 150 ºC~300 ºC.

Optionally, reaction time of the carbon-coated silicon oxygen material and the lithium source is 2.0 h~6.0 h.

Optionally, a mass ratio of the carbon-coated silicon oxygen material to the lithium source is 1 :(0.01 ~0.20).

Optionally, a mass percentage content of lithium in the pre-lithiated carbon-coated silicon oxygen material is 3 wt%~20 wt%.

Optionally, before performing the surface etching treatment on the pre-lithiated silicon oxygen material, the method further includes:
making the silicon oxygen material react with a lithium source to obtain the pre-lithiated silicon oxygen material; or
making the carbon-coated silicon oxygen material react with a lithium source to obtain a pre-lithiated carbon-coated silicon oxygen material.

Optionally, an acid solution used in the surface etching treatment has the following characteristic: when the pre-lithiated silicon oxygen material is subjected to the surface etching treatment, pH of a reaction system of the surface etching is maintained to be less than 7.

Optionally, an acid solution used in the surface etching treatment includes at least one of hydrochloric acid, acetic acid, nitric acid, citric acid, oxalic acid, sulfuric acid, formic acid, phenol, phosphoric acid, hydride phosphate, hydroiodic acid, hydrobromic acid, ethylene diamine tetraacetic acid, glycolic acid, gluconic acid, and succinic acid.

Optionally, time of the surface etching treatment is 0.5-10.0 h.

The present disclosure further provides a lithium ion battery, wherein the lithium ion battery contains the negative electrode material according to the first aspect in the above or the negative electrode material prepared by the preparation method of a negative electrode material according to the first aspect in the above.

### Brief Description of Drawings

FIG. 1 is a process flow diagram of a preparation method of a negative electrode material provided by the present disclosure;
FIG. 2 is a structural schematic diagram of the negative electrode material provided by the present disclosure;
FIG. 3 is a structural schematic diagram of the negative electrode material provided by the present disclosure;
FIG. 4 is a schematic diagram of changes of capacity retention ratio of the negative electrode materials prepared in the examples and comparative examples of the present disclosure along with the increase of the number of cycles;
FIG. 5 is a schematic diagram of changes of electrical conductivity of the negative electrode materials prepared in the examples and comparative examples of the present disclosure; and
FIG. 6 is an XRD diffraction pattern of the negative electrode material prepared in Example 3 of the present disclosure.

Reference signs: 100-active material, 200-coating layer, 120-lithium silicate, 140-water-insoluble silicate, 160-silicon oxygen material.

### Detailed Description of Embodiments

In order to better illustrate the present disclosure and facilitate the understanding of the technical solutions of the present disclosure, the present disclosure will be further described in detail below. However, the following embodiments are merely simple examples of the present disclosure, and do not represent or limit the scope of protection of the present disclosure, and the scope of protection of the present disclosure is determined by the claims.

The present disclosure provides a negative electrode material and a preparation method thereof and a lithium ion battery, wherein the negative electrode material of the present disclosure can improve the processability, has excellent electrochemical cycle and expansion suppression performances, can prolong the service lifetime of the lithium ion battery, and can reduce the production costs.

An embodiment of the present disclosure provides a negative electrode material, wherein the negative electrode material includes an active material, the active material includes a skeleton (framework) structure that runs throughout the active material and a silicon oxygen material embedded on the skeleton structure; the skeleton structure includes a skeleton of lithium silicate located inside the active material and a skeleton of water-insoluble silicate located on a surface layer of the active material, and the skeleton of water-insoluble silicate is linked with the skeleton of lithium silicate, wherein in an XRD pattern of the negative electrode material, an intensity of the strongest diffraction characteristic peak of lithium silicate is I_{A}, and an intensity of the strongest diffraction characteristic peak of water-insoluble silicate is I_{B}, and 0.03≤I_{B}/I_{A}≤0.2.

Optionally, a range of I_{B}/I_{A} may be, for example, 0.05≤I_{B}/I_{A}≤0.2, 0.1≤I_{B}/I_{A}≤0.2, 0.12≤I_{B}/I_{A}≤0.18 or 0.14≤I_{B}/I_{A}≤0.16.

As used herein, the term "skeleton (framework)" refers to a main substance forming a certain structure (such as a unit structure, a block structure, a sheet structure, a layered structure, a core structure, and a shell structure) (for example, a weight of the main substance is greater than or equal to 51% of a total weight of the structure). In other words, this main substance can be understood as a basic substance supporting, forming, or constituting a certain structure. For example, "skeleton of lithium silicate" can be understood as that lithium silicate is a main component for forming a structure where lithium silicate is located, and is a basic substance supporting, forming or constituting the structure where lithium silicate is located, and the structure where lithium silicate is located can be internally dispersed/embedded with other components (such as the silicon oxygen material disclosed herein). For example, "skeleton of water-insoluble silicate" can be understood as that the water-insoluble silicate is a main component for forming the structure where the water-insoluble silicate is located, and is a basic substance supporting, forming or constituting the structure where the water-insoluble silicate is located, and the structure where the water-insoluble silicate is located can be internally dispersed/embedded with other components (such as the silicon oxygen material disclosed herein).

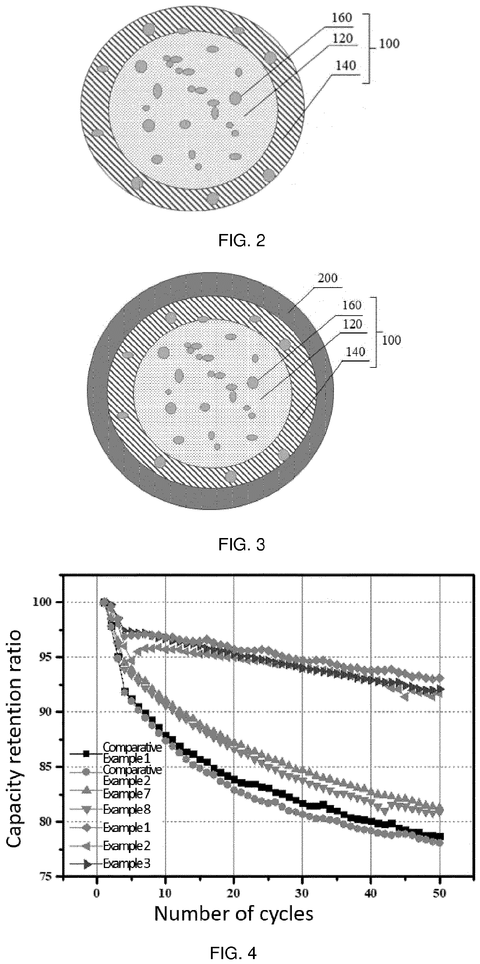

In some embodiments, referring to FIG. 2, the negative electrode material includes an active material 100; and
the active material 100 includes lithium silicate 120, a water-insoluble silicate 140, and a silicon oxygen material 160.

In the above, the water-insoluble silicate 140 is coated on a surface of the lithium silicate 120; and
the lithium silicate 120 and/or the water-insoluble silicate 140 contains the silicon oxygen material 160.

In the above, in the XRD pattern of the negative electrode material, the intensity of the strongest diffraction characteristic peak of the lithium silicate is I_{A}, the intensity of the strongest diffraction characteristic peak of the water-insoluble silicate is I_{B}, and 0.03≤I_{B}/I_{A}≤0.2.

In some embodiments, it can be seen from the following preparation method that a pre-lithiated silicon oxygen material, having undergone surface etching (the material mainly contains the lithium silicate 120, an inner core generally includes the lithium silicate 120, and a silica layer is formed on a surface), leaves pores for the formation of the water-insoluble silicate, and subsequently reacts with a metal M- and/or metal A-containing substance, to obtain a structure with the lithium silicate 120 being coated by the water-insoluble silicate.

Meanwhile, after a subsequent high-temperature treatment, silicon-based disproportionation occurs to the pre-lithiated silicon oxygen material, and a structure with the silicon oxygen material 160 being dispersed or embedded in the lithium silicate 120 and/or the water-insoluble silicate 140 is formed.

Optionally, the water-insoluble silicate 140 includes, but is not limited to, a silicate that is insoluble in a polar solution (such as an aqueous solution).

Optionally, the silicon oxygen material (or referred to as silicon-based active material) includes at least one of nano-silicon, oxide of silicon, carbide of silicon, nitride of silicon, sulfide of silicon or silicon alloy.

Referring to FIG. 3, optionally, the negative electrode material further includes a coating layer 200, which is coated on a surface of the active material 100.

In the above solution, the silicon oxygen material (or referred to as a silicon-based active material, including nano-silicon, oxide of silicon, carbide of silicon, nitride of silicon, sulfide of silicon or silicon alloy, etc.) is embedded on the skeleton (i.e., skeleton of silicate) structure, the water-insoluble silicate on an outer layer and the internal lithium silicate are silicates of different crystal forms grown and formed on the same silicon oxygen skeleton. By linking the silicates of two different materials, it is beneficial to exerting electrochemical performance of the active material, performing electron transfer and lithium deintercalation and intercalation quickly, reducing an internal resistance of the material, and improving lithium ion transfer capacity. By coating the silicon oxygen material with the skeleton of water-insoluble silicate located on the outer layer, contact of water with the strongly alkaline lithium silicate can be effectively blocked, and lithium silicate hydrolysis can be inhibited, thus effectively improving the gas generation of the material, realizing pH regulation of the material, and improving the processability. The inner lithium silicate and the outer water-insoluble silicate are tightly linked by the silicon and the silicon oxygen material, and difference between work functions of the two silicate materials results in that after the two form a heterojunction interface, such that the electron transfer efficiency can be improved at the junction interface, thereby improving a lithium intercalation depth, and improving the capacity and cycle performances. The lithium silicate and the water-insoluble silicate are silicates of different crystal forms grown and formed on the same silicon oxygen skeleton, can form a tight heterojunction interface, and will not form a vacuum section, which is beneficial to electron transfer of the material between the heterojunction, realizing effective conduction of lithium ions through the skeleton structure and the silicon oxygen material on the surface of the active material, improving the ionic conductivity of the material, and facilitating the exertion of rate capability of the material.

Optional technical solutions of the present disclosure are provided below, without limiting the technical solutions provided by the present disclosure, and through the following optional technical solutions, the technical objectives and beneficial effects of the present disclosure can be better achieved and realized.

As an optional technical solution of the present disclosure, the silicon oxygen material is SiOₙ, where 0.5≤n≤1.5. Optionally, the silicon oxygen material may be SiOₙ, such as SiO_{0.5}, SiO_{0.8}, SiO_{0.9}, SiO, SiO_{1.1}, SiO_{1.2} or SiO_{1.5}. Optionally, the silicon oxygen material is SiO. It can be understood that SiOₙ has relatively complex composition, and can be understood as being formed by nano-silicon uniformly dispersed in SiO₂, and exemplarily, the silicon oxygen material may include at least two of elemental silicon, silicon dioxide, and silicon monoxide.

As an optional technical solution of the present disclosure, the lithium silicate includes at least one of Li₂SiO₃, Li₂Si₂O₅, Li₄SiO₄, Li₂Si₃O₇, Li₈SiO₆, Li₆Si₂O₇, Li₄Si₂O₇, Li₂Si₄O₇, and LiSiOs. It should be noted that lithium metal is embed in silicon oxygen skeleton, manifested by a lithium silicate skeleton structure. As an optional technical solution of the present disclosure, the lithium silicate includes Li₂O·mSiO₂, where m satisfies 0<m≤2, for example, m may be 0.1, 0.3, 0.5, 0.7, 0.9, 1.0, 1.2, 1.4, 1.5, 1.6, 1.8 or 2.

As an optional technical solution of the present disclosure, the water-insoluble silicate includes zA₂O·MO_{y}·_{X}SiO₂, where M includes at least one of Mg, Al, Ca, Ge, Cr, V, Ti, Sc, Co, Ni, Cu, Sr, Zn, Zr, Fe, and Mn, A includes at least one of Li, Na, and K, 0.2≤x≤10.0, 1.0≤y≤3.0, and 0≤z≤5.0. It should be noted that the metal A and/or the metal M are/is embedded in the silicon oxygen skeleton to form the skeleton structure of water-insoluble silicate.

In some embodiments, the water-insoluble silicate further includes A₂O▪nSiO₂, wherein A includes at least one of Li, Na, and K, and 1≤n≤10.

As an optional technical solution of the present disclosure, the water-insoluble silicate may include, but is not limited to, Mg₂SiO₄, Al₂SiO₅, CaSiOs, LiAlSiO₄, LiAlSiO, LiAISi₂O₆, LiAlSi₃O₈, Li₂MgSiO₄, MgSiO₃, or Li₂CaSiO₄.

In order to accelerate conduction of electrons and improve powder electrical conductivity of the material, an optional work function range of the water-insoluble silicate is 2.5 eV≤η≤7.0 eV, optionally, 4.50 eV≤η≤6.5 eV, which, on the basis of ensuring processability, can facilitate improving the electron transfer efficiency, and greatly improve the powder electrical conductivity. It can be understood that a suitable work function range can enable higher electron transfer efficiency between heterojunction, the skeleton of water-insoluble silicate, as an outer skeleton, is in direct contact with a conductive carbon layer, and has a work function that needs to be higher than the work function of the carbon layer, and lower than the work function of lithium silicate, which is more beneficial to the transfer of electrons from the outer layer to the interior, thereby improving the electrical conductivity.

As an optional technical solution of the present disclosure, the water-insoluble silicate is located in a depth region of 20 nm~50 nm of the surface of the active material, for example, 25 nm~45 nm, 28 nm~38 nm or 30 nm~35 nm, such as 20 nm, 24 nm, 26 nm, 28 nm, 30 nm, 34 nm, 36 nm, 38 nm, 40 nm, 44 nm, 46 nm, 48 nm, and 50 nm, or an interval value between any two endpoint values in the above. That is, the water-insoluble silicate is located in a depth region from the surface of the active material to, for example, 20 nm~50 nm, along a radial direction. Since the water-insoluble silicate is located on the surface layer of the active material, a surface layer structure consisting of the skeleton of water-insoluble silicate and the silicon oxygen material distributed on the skeleton of water-insoluble silicate can prevent an electrolytic solution from entering the interior of the active material, prevent contact of water with the strongly alkaline lithium silicate, and can effectively inhibit lithium silicate hydrolysis.

As an optional technical solution of the present disclosure, the skeleton of water-insoluble silicate is linked with the skeleton of lithium silicate to form a heterojunction structure. It can be understood that the silicon oxygen material is embedded on the skeleton structure, and the skeleton of water-insoluble silicate and the skeleton of lithium silicate are connected in series through the silicon oxygen material, so that the two skeletons are linked to form an apparent heterojunction. Such heterojunction is composed of lithium silicate and water-insoluble silicate, and both of them are grown through common SiO₂ skeleton reaction, so that the combination between interfaces is close and continuous, without forming a vacuum section, thereby facilitating electron transfer of the material between the heterojunction. Due to the difference between the work functions of the interfaces and a suitable distance between the interfaces, such heterojunction can promote the electron transfer inside the active material and improve the electrical conductivity. The heterojunction structure can effectively improve the electrical conductivity of the active material, improve the first efficiency of the material, and meanwhile inhibit the hydrolysis, and control pH.

As an optional technical solution of the present disclosure, in the XRD pattern of the negative electrode material, an intensity of a diffraction characteristic peak of the lithium silicate is I_{A}, an intensity of a diffraction characteristic peak of the water-insoluble silicate is I_{B}, and 0.03≤I_{B}/I_{A}≤0.20. By controlling the ratio of I_{B}/I_{A}, the strongest electron transmission capacity can be achieved through the heterojunction, and the electronic conductivity can reach 15 S/cm or above, which is beneficial to the exertion of rate capability of the material. In order to avoid the loss of lithium silicate, optionally, 0.12≤I_{B}/I_{A}≤0.18, so that high electrical conductivity of the silicon-based material can be ensured under the condition of ensuring the processability.

When the water-insoluble silicate is water-insoluble lithium silicate, the intensity of the diffraction characteristic peak of the water-insoluble silicate is l_{c}, the intensity of the diffraction characteristic peak of lithium silicate inside the active material is I, after the water-insoluble lithium silicate is subjected to an acid-pickling treatment until no reaction occurs, the intensity of the diffraction characteristic peak of the water-insoluble silicate after the treatment is I_{D}, and 0.03≤(I_{C}-I_{D})/2I≤0.2. In the above, during the acid-pickling treatment, in order to remove the insoluble lithium silicate on the surface, and retain SiO₂ (silicon oxygen skeleton) to be deposited on the surface, an acid solution is sulfuric acid, hydrochloric acid, nitric acid, aqua regia, etc. Under a condition that the water-insoluble silicate is water-insoluble lithium silicate, by controlling the ratio of (I_{C}-I_{D})/2I, the electrons can also be made to reach the strongest transmission capacity by virtue of the heterojunction, further effectively exerting the rate capability of the material, and ensuring the high electrical conductivity of the silicon-based material.

As an optional technical solution of the present disclosure, a mass content of Li element in the water-insoluble silicate on the surface layer of the active material is W₁%, and a content of the Li element in the lithium silicate inside the active material is W₂%, and W₂>W₁≥0. That is, a concentration of the Li element in the surface of the active material is lower than that of the Li element inside the active material. The lithium silicate is mainly located inside the active material, and the water-insoluble silicate is located on the outer layer of the active material, so that the silicon oxygen material coated by the skeleton of water-insoluble silicate can prevent the electrolytic solution from entering the interior of the active material, prevent contact of water with the strongly alkaline lithium silicate, can effectively inhibit lithium silicate hydrolysis, achieve pH regulation, and inhibit the gas generation phenomenon.

Optionally, the negative electrode material further includes a carbon layer formed on the surface of the active material. It can be understood that the skeleton of water-insoluble silicate located on the surface layer of the active material and the silicon oxygen material embedded therein can be in direct contact with the carbon layer, which can ensure stability of conductive channels and lithium ion transmission channels inside the particles.

Optionally, a material of the carbon layer is at least one selected from the group consisting of hard carbon, soft carbon, carbon nanotube, carbon nanofiber, graphite, and graphene.

An average thickness of the carbon layer is 30 nm~500 nm, and optionally, the thickness of the carbon layer may be, for example, 60 nm~450 nm, 120 nm~350 nm or 220 nm~320 nm, such as 30 nm, 50 nm, 100 nm, 150 nm, 200 nm, 250 nm, 300 nm, 350 nm, 400 nm, 450 nm, 500 nm, or an interval value between any two endpoint values in the above. The thickness of the carbon layer is not limited to the listed numerical values, and other unlisted numerical values within the numerical ranges are also applicable. With the thickness of the carbon layer in the present disclosure being in the above ranges, it is beneficial to improving the transmission efficiency of lithium ions, and meanwhile is advantageous to high-rate charging and discharging of the material, and effectively ensuring the comprehensive performance of the negative electrode material; and meanwhile ensuring the electrical conductivity of the negative electrode material and inhibiting the volume expansion of the material, and maintaining long cycle performance of the negative electrode material.

Optionally, when the surface of the active material is coated with the carbon layer, a mass percentage content of carbon in the negative electrode material is 1.5 wt%~10 wt%, which optionally may be, for example, 2.0 wt%~8.0 wt%, 4.0 wt%~7.0 wt% or 5.0 wt%~6.0 wt%, such as 1.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt% or 10 wt%, or an interval value between any two endpoint values in the above, but the mass percentage content of carbon is not merely limited to the listed numerical values, and other unlisted numerical values within the numerical ranges are also applicable.

A mass percentage content of lithium in the negative electrode material is 3 wt%~15 wt%, optionally, the mass percentage content of lithium may be, for example, 4 wt%~14 wt%, 6 wt%~12 wt% or 8 wt%~10 wt%, such as 3 wt%, 3.5 wt%, 4.5 wt%, 5.5 wt%, 8 wt%, 9.5 wt%, 10.5 wt%, 12.1 wt%, 12.9 wt% or 15 wt%, or an interval value between any two endpoint values in the above, but the mass percentage content of lithium is not merely limited to the listed numerical values, and other unlisted numerical values within the numerical ranges are also applicable. With the lithium content of the negative electrode material being within the above ranges, it is ensured that most of lithium source enters the interior of the silicon oxygen material to form the skeleton of lithium silicate (i.e., lithium silicate 120), and the high first Coulombic efficiency of the negative electrode material is improved. On the other hand, the lithium silicate selected above can control a lithium amount on the surface layer, reduce the lithium loss after the treatment on the surface layer, improve the utilization rate, and ensure formation of the skeleton of silicate (i.e., water-insoluble silicate 140) by lithium doping on the surface layer of the active material, which has the water-insoluble characteristics, so as to further effectively prevent contact of water with the strongly alkaline lithium silicate (i.e., lithium silicate 120), effectively inhibit the lithium silicate hydrolysis, exert the pH regulation, and inhibit the gas generation. A specific surface area of the negative electrode material is 1.0 m²/g~12.0 m²/g, which may be, for example, 2.0 m²/g~10.0 m²/g, 3.5 m²/g~6.0 m²/g or 4.0 m²/g~5.5 m²/g, such as 1.0 m²/g, 1.50 m²/g, 2.00 m²/g, 3.00 m²/g, 4.00 m²/g, 5.0 m²/g, 7.0 m²/g, 9.0 m²/g, 10.0 m²/g or 12.0 m²/g, or an interval value between any two endpoint values in the above, but is not merely limited to the listed numerical values, and other unlisted numerical values within the numerical ranges are also applicable. With the specific surface area of the negative electrode material being within the above ranges, it ensures the processability of the material, is beneficial to improving the first efficiency of a lithium battery made of the negative electrode material, and is advantageous to improving the cycle performance of the negative electrode material.

As an optional technical solution of the present disclosure, an average particle size of the negative electrode material is 3.0 µm~12.0 µm, which may be, for example, 4.0 µm∼11.0 µm, 5.0 µm~10.0 µm or 6.0 µm~8.0 µm, such as 3.0 µm, 4.0 µm, 6.5 µm, 7.0 µm, 8.2 µm, 9.5 µm, 10.0 µm or 12.0 µm, or an interval value between any two endpoint values in the above. With the average particle size of the negative electrode material being within the above ranges, it is beneficial to improving the cycle performance of the negative electrode material. Optionally, the average particle size of the negative electrode material is 4.5 µm∼9.0 µm.

As an optional technical solution of the present disclosure, a tap density of the negative electrode material is 0.6 g/cm³~1.2 g/cm³, which may be, for example, 0.7 g/cm³~1.1 g/cm³, 0.8 g/cm³~1.0 g/cm³ or 0.9 g/cm³~1.0 g/cm³, such as 0.6 g/cm³, 0.7 g/cm³, 0.75 g/cm³, 0.8 g/cm³, 0.85 g/cm³, 0.9 g/cm³, 0.95 g/cm³, 1.0 g/cm³, 1.1 g/cm³ or 1.2 g/cm³, or an interval value between any two endpoint values in the above, but it is not merely limited to the listed numerical values, and other unlisted numerical values within the numerical ranges are also applicable. With the tap density of the negative electrode material being within the above ranges, it is beneficial to improving the energy density of the lithium battery made of the negative electrode material.

A pH value of the negative electrode material is 8.5-12.0, which may be, for example, 8.6-11.0, 9.0-10.5 or 9.5-10.0, such as 8.5, 8.8, 8.9, 9.2, 9.5, 9.8, 10.0, 10.3, 10.5, 10.8, 11.0, 12.0, or an interval value between any two endpoint values in the above. It can be understood that filling the carbon material with a lithium-containing compound can effectively reduce the basicity of the material, improve the water-based processibility of the material, and improve the first efficiency of the negative electrode material.

As an optional technical solution of the present disclosure, a content of lithium element in the water-insoluble silicate of the negative electrode material is pm, and a total content of the lithium element in the negative electrode material is p_{Li}, where 0.01≤pm/p_{Li}≤0.6. It is found in the present disclosure that with the content of the lithium element in the negative electrode material being within the above range, it can further ensure to generate stable skeleton of water-insoluble silicate (i.e., the water-insoluble silicate 140) on the surface layer of the active material, further effectively prevent contact of water with the strongly alkaline lithium silicate (i.e., the lithium silicate 120), effectively inhibit the lithium silicate hydrolysis, achieve the pH regulation, and inhibit the gas generation phenomenon.

As an optional technical solution of the present disclosure, the negative electrode material is a silicon oxygen composite material.

The preparation method provided by the present solution is described in detail below.

An embodiment of the present disclosure provides a preparation method of a negative electrode material, including the following steps:
S10, performing a surface etching treatment on a pre-lithiated silicon oxygen material; and
S20, mixing the silicon oxygen material having undergone the surface etching treatment with a metal M- and/or metal A-containing substance (such as elemental metal M and/or elemental metal A; and a metal M- and/or metal A-containing compound), and performing a solid-phase thermal reaction under a protective atmosphere, to obtain the negative electrode material.

The negative electrode material includes an active material, the active material includes a skeleton structure that runs throughout the active material and a silicon oxygen material distributed on the skeleton structure; the skeleton structure includes a skeleton of lithium silicate located inside the active material and a skeleton of water-insoluble silicate located on a surface of the active material, and the skeleton of water-insoluble silicate is linked with the skeleton of lithium silicate.

In the above solution, by performing the surface etching treatment on the pre-lithiated silicon oxygen material, the metal M-containing substance is made to have the solid-phase thermal reaction with the etched silicon oxygen material, so that the water-insoluble silicate is formed on the surface of the etched silicon oxygen material, which can effectively isolate soluble and strongly alkaline substances such as lithium silicate from dissolving in a slurry to cause uncontrolled pH, inhibit the gas generation of the slurry, and can also prevent loss of active silicon oxygen material and active lithium, and improve the first efficiency capacity of the material; the lithium silicate and the water-insoluble silicate are silicates of different crystal forms grown and formed on the same silicon oxygen skeleton, can form a tight heterojunction interface, and will not form a vacuum section, which is beneficial to electron transfer of the material between the heterojunction, improves the ionic conductivity of the material, and is beneficial to exertion of rate capability of the material. In addition, the whole preparation process is simple, is beneficial to mass production, and reduces costs. Before step S10, the preparation method further includes:
performing carbon coating on the silicon oxygen material, to obtain a carbon-coated silicon oxygen material.

It can be understood that by performing the carbon coating on the silicon oxygen material, because the carbon coating layer is relatively loose, there are a large number of microchannels, so that all subsequent lithium sources can pass through the microchannels of the carbon coating layer, penetrate through the carbon coating layer and react on the surface of the silicon oxygen material, and in the finally obtained negative electrode material, the carbon coating layer is still located at an outermost layer.

As an optional technical solution of the present disclosure, the carbon coating includes gas-phase carbon coating and/or solid-phase carbon coating.

As an optional technical solution of the present disclosure, when the gas-phase carbon coating is adopted, the silicon oxygen material is heated to 600 °C~1000 °C under a protective atmosphere, an organic carbon source gas is introduced, and the resultant is maintained at the temperature for 0.5 h~10 h and then cooled.

In some embodiments, the organic carbon source gas includes hydrocarbons. In some embodiments, the organic carbon source includes hydrocarbons. In some embodiments, the hydrocarbons include alkanes, alkenes, alkynes, and aromatics. In some embodiments, the hydrocarbons are hydrocarbons gasifiable at 600 ºC~1000 ºC. In some embodiments, the hydrocarbons include at least one of methane, ethylene, acetylene, and benzene. In some embodiments, the hydrocarbons include at least one of organic carbon sources such as methane, ethane, propane, ethylene, propylene, acetylene, benzene or toluene.

As an optional technical solution of the present disclosure, when the solid-phase carbon coating is adopted, after a material to be coated with carbon is fused with the carbon source for 0.5 h~2 h, a carbon mixture obtained is carbonized for 2 h~6 h at 600 ºC~1000 ºC and cooled.

In some embodiments, the carbon source includes at least one of hard carbon, soft carbon, carbon nanotube, carbon nanofiber, graphite, graphene, asphalt, and organic-inorganic mixed carbon materials.

Optionally, before step S10, the preparation method further includes:
making the silicon oxygen material react with a lithium source to obtain a pre-lithiated silicon oxygen material; or
making the carbon-coated silicon oxygen material with the lithium source to obtain the pre-lithiated carbon-coated silicon oxygen material.

In the above, the silicon oxygen material is SiOₙ, where 0.5≤n≤1.5, and SiOₙ may be, for example, SiO_{0.5}, SiO_{0.6}, SiO_{0.7}, SiO_{0.8}, SiO_{0.9}, SiO, SiO_{1.1}, SiO_{1.2} or SiO_{1.5}. Optionally, the silicon oxygen material is SiO.

In some embodiments, an average particle size (D₅₀) of the silicon oxygen material is 2.0 µm-15.0 µm, which may be, for example, 3.0 µm-13.0 µm, 6.0 µm-11.0 µm or 7.0 µm-10.0 µm, such as 2.0 µm, 3.5 µm, 4.0 µm, 4.5 µm, 5.0 µm, 5.5 µm, 6.0 µm, 7.5 µm, 9.0 µm, 10.5 µm, 12 µm or 15.0 µm, or an interval value between any two endpoint values in the above. With the average particle size of the silicon oxygen material in the present disclosure being within the above ranges, structural stability, thermal stability, and long cycle stability of the negative electrode material can be further ensured.

In some embodiments, an average particle size (D₅₀) of the carbon-coated silicon oxygen material is 2.0 µm-15.0 µm, which may be, for example, 3.0 µm-13.0 µm, 6.0 µm-11.0 µm or 7.0 µm-10.0 µm, such as 2.0 µm, 3.5 µm, 4.0 µm, 4.5 µm, 5.0 µm, 5.5 µm, 6.0 µm, 7.5 µm, 9.0 µm, 10.5 µm, 12 µm or 15.0 µm, or an interval value between any two endpoint values in the above, but it is not merely limited to the listed numerical values, and other unlisted numerical values within the numerical ranges are also applicable. It can be understood that, by controlling the particle size of the carbon-coated silicon oxygen material or silicon oxygen material within the above ranges, it can avoid the problem of cycle stability caused by uneven distribution and type of the lithiated silicate products, and it is beneficial to improving the structural stability, thermal stability, and long cycle stability of the negative electrode material.

Optionally, a thickness of the carbon layer on the surface of the carbon-coated silicon oxygen material is 30 nm~500 nm, which may be, for example, 50 nm~550 nm, 90 nm~500 nm, 160 nm~400 nm or 220 nm~300 nm, such as 30 nm, 50 nm, 60 nm, 70 nm, 80 nm, 90 nm, 100 nm, 150 nm, 200 nm, 300 nm, 400 nm or 500 nm, or an interval value between any two endpoint values in the above, but it is not merely limited to the listed numerical values, and other unlisted numerical values within the numerical ranges are also applicable. It can be understood that if the coating layer is too thick, the lithium ion transmission efficiency is reduced, which is disadvantageous to high-rate charging and discharging of the material, and reduces the comprehensive performance of the negative electrode material, and if the coating layer is too thin, it is disadvantageous to increasing the electrical conductivity of the negative electrode material and has relatively weak performance in inhibiting the volume expansion of the material, resulting in poor long cycle performance.

As an optional technical solution of the present disclosure, the lithium source includes elemental lithium, a lithium-containing compound, or a mixture thereof. As an optional technical solution of the present disclosure, the lithium source includes at least one of lithium hydride, lithium alkyl, lithium metal, lithium aluminum hydride, lithium amide, and lithium borohydride. Optionally, the lithium source further includes a lithium-containing oxide, a lithium-containing hydride, and the like.

Optionally, a reaction temperature of the carbon-coated silicon oxygen material or silicon oxygen material and the lithium source is 150 ºC~300 ºC, which may be, for example, 180 ºC~280 ºC, 200 ºC~260 ºC or 210 ºC~240 ºC, such as 150 ºC, 170 ºC, 180 ºC, 200 ºC, 220 ºC, 250 ºC, 280 ºC or 300 ºC, or an interval value between any two endpoint values in the above. Reaction time is 2.0 h~6.0 h, which may be 2.0 h, 2.5 h, 3.0 h, 3.5 h, 4.0 h, 4.5 h, 5.0 h, 5.5 h or 6.0 h, etc., or an interval value between any two endpoint values in the above. By controlling the reaction temperature and the reaction time, at least part of the lithium source enters the interior of the particles of the silicon oxygen material to form Li-SiO material, most of the lithium source is deposited on the surface layer of the silicon oxygen material and has a reduction reaction with the silicon oxygen material, to generate lithium oxide or lithium hydroxide, and the lithium oxide or lithium hydroxide is intercalated in the pores of the carbon coating layer on the surface of the silicon oxygen material.

As an optional technical solution of the present disclosure, a mass ratio of the carbon-coated silicon oxygen material SiOₙ to the lithium source is 1:(0.01 ∼0.20), which optionally may be, for example, 1:(0.02~0.18), 1:(0.04~0.16) or 1:(0.08~0.12), such as 1:0.01, 1:0.03, 1:0.05, 1:0.1, 1:0.15, 1:0.2, or an interval value between any two endpoint values in the above, but is not merely limited to the listed numerical values, and other unlisted numerical values within the numerical ranges are also applicable.

As an optional technical solution of the present disclosure, a mass percentage content of lithium in the pre-lithiated carbon-coated silicon oxygen material is 3 wt%~20 wt%. It is found in the present disclosure that, with the lithium content in the pre-lithiated carbon-coated silicon oxygen material being within the above ranges in the present disclosure, it can ensure that a highly stable water-insoluble silicate is effectively generated, thereby preventing the electrolytic solution from entering the interior of the active material, and effectively inhibiting the gas generation phenomenon. When the lithium content in the pre-lithiated carbon-coated silicon oxygen material is too low or too high, it is not beneficial to full reaction of the silicon dioxide skeleton and the metal M-containing substance, to generate the water-insoluble silicate with stable property, so as to cut off the contact between the silicon oxygen material and the lithium silicate with the electrolytic solution, thereby inhibiting the gas generation phenomenon.

Optionally, a mass percentage content of lithium in the pre-lithiated carbon-coated silicon oxygen material may be, for example, 4 wt%~18 wt%, 6 wt%~16 wt% or 9 wt%~14 wt%, such as 3 wt%, 5 wt%, 8 wt%, 10 wt%, 12 wt%, 15 wt%, 18 wt% or 20 wt%, or an interval value between any two endpoint values in the above, but it is not merely limited to the listed numerical values, and other unlisted numerical values within the numerical ranges are also applicable.

In some embodiments, the pre-lithiated silicon oxygen material or the pre-lithiated carbon-coated silicon oxygen material can be subjected to a surface etching treatment using an acid-pickling treatment.

As an optional technical solution of the present disclosure, an acid solution used in the surface etching treatment has the following characteristic: when the pre-lithiated silicon oxygen material is subjected to the surface etching treatment, pH of a reaction system of the surface etching is maintained to be less than 7. As an optional technical solution of the present disclosure, the acid solution used in the surface etching treatment includes, but is not limited to, at least one of hydrochloric acid, acetic acid, nitric acid, citric acid, oxalic acid, sulfuric acid, formic acid, phenol, phosphoric acid, hydride phosphate, hydroiodic acid, hydrobromic acid, ethylene diamine tetraacetic acid, glycolic acid, gluconic acid, and succinic acid.

As an optional technical solution of the present disclosure, time of the surface etching treatment is 0.5-10.0 h.

After the surface etching treatment, there is no or trace amount of lithium silicate on the surface layer of the silicon oxygen material, and the surface layer of the silicon oxygen material is mainly the silicon oxygen material and contains disproportionated silicon dioxide.

It can be understood that the skeleton of silicon dioxide exposed on the surface of the silicon oxygen material having undergone the surface etching treatment reacts with the metal M-containing substance, to generate the water-insoluble silicate.

S210, mixing the silicon oxygen material having undergone the surface etching treatment with the metal M- and/or metal A-containing substance, and performing the solid-phase thermal reaction under a protective atmosphere, to obtain the negative electrode material.

As an optional technical solution of the present disclosure, the metal M-containing substance includes an elemental M metal and/or a metal M-containing compound, the metal M-containing compound includes at least one of a carbonate of metal M, an oxide of metal M, a hydroxide of metal M, and a soluble silicate of metal M, where M is at least one selected from the group consisting of Mg, Al, Ca, Ge, Cr, Pb, Sr, Zn, Zr, Fe, and Mn. Exemplarily, the metal M-containing substance may be an oxide of M, for example, magnesium oxide, calcium oxide, and aluminum oxide; and the metal M-containing substance may be a carbonate of metal M, such as magnesium carbonate, calcium carbonate, and aluminum carbonate. As an optional technical solution of the present disclosure, for the elemental metal M, M is at least one selected from the group consisting of Mg, Al, Ca, Ge, Cr, Pb, Sr, Zn, Zr, Fe, and Mn.

The above metal M and metal A are each selected from metal elements having an electronegativity of 1.0-1.9.

Optionally, the metal M-containing substance is an oxide of metal M.

As an optional technical solution of the present disclosure, the metal A-containing substance includes at least one of elemental metal A, a carbonate of metal A, an oxide of metal A, and a hydroxide of metal A, wherein A includes at least one of Li, Na, and K. In the metal A-containing elementary substance, the metal A is at least one selected from the group consisting of Li, Na, and K. As an optional technical solution of the present disclosure, the metal A-containing compound includes at least one of a carbonate of metal A, an oxide of metal A, a hydroxide of metal A, and a soluble silicate of metal A, wherein exemplarily, the metal A-containing compound can be an oxide of A, for example, lithium oxide, potassium oxide, and sodium oxide; the metal A-containing compound may be a carbonate of metal A, for example, lithium carbonate, potassium carbonate, and sodium carbonate, wherein a metal salt with relatively strong basicity (such as pH>10), such as lithium carbonate, sodium carbonate, and potassium carbonate, can be mixed for use, and cannot be used alone. As an optional technical solution of the present disclosure, a mass ratio of the silicon oxygen material having undergone the surface etching treatment to the metal M-containing compound (elemental metal M or M-containing compound) is 1 :(0.01 ~0.1), optionally 1: (0.075-0.1). It is found in the present disclosure that when the mass ratio is too low, excessive insoluble inactive MO•xSiO₂ is generated on the surface, where 0.2≤x≤10.0, resulting in decrease in the reversible capacity and decrease in the electrical conductivity of the powder; if the mass ratio is too high, it is indicated that the content of the metal M-containing substance is too small, and the metal M-containing substance cannot sufficiently react with the silicon oxygen material, which is disadvantageous to forming the skeleton of water-insoluble silicate on the surface layer of the silicon oxygen material, causes the electrolytic solution to easily pass through the surface of the negative electrode material to react with lithium silicate inside the particles, and is not conducive to suppressing the basicity of the material, so that the negative electrode material generates gas seriously during the processing, and the first efficiency and cycle stability of the battery are reduced.

As an optional technical solution of the present disclosure, a mass ratio of the silicon oxygen material having undergone the surface etching treatment to the metal A-containing elementary substance or compound is 1:(0.01∼0.1). It is also found in the present disclosure that with the insoluble inactive A₂O▪nSiO₂, 1≤n≤10, being within the above ratio range of the present disclosure, high reverse capacity and high electrical conductivity of the powder can be ensured, so that the compound of metal A can react with the silicon oxygen material sufficiently, which is beneficial to forming the skeleton of water-insoluble silicate on the surface layer of the silicon oxygen material, avoiding the reaction of the electrolytic solution with the lithium silicate inside the particles, thus, the basicity of the material is effectively inhibited, and the gas generation of the negative electrode material during the processing is avoided, thereby further improving the first efficiency and cycle stability of the battery.

Optionally, a mass ratio of the silicon oxygen material having undergone the surface etching treatment to the metal M-containing substance may be, for example, 1:(0.020~0.095), 1:(0.040~0.090), 1:(0.060~0.085) or 1 :(0.078~0.082), such as 1:0.02, 1:0.03, 1:0.04, 1:0.05, 1:0.06, 1:0.07, 1:0.075, 1:0.081, 1:0.083, 1:0.085, 1:0.087, 1:0.091, 1:0.093, 1:0.095 or 1:0.1, or an interval value between any two endpoint values in the above, but it is not merely limited to the listed numerical values, and other unlisted numerical values within the numerical ranges are also applicable.

Optionally, a mass ratio of the silicon oxygen material having undergone the surface etching treatment to the metal A-containing elementary substance or compound may be, for example, 1:(0.020∼0.095), 1:(0.040∼0.090), 1:(0.060∼0.085) or 1:(0.078~0.082), such as 1:0.02, 1:0.03, 1:0.04, 1:0.05, 1:0.06, 1:0.07, 1:0.075, 1:0.081, 1:0.083, 1:0.085, 1:0.087, 1:0.091, 1:0.093, 1:0.095 or 1:0.1, or an interval value between any two endpoint values in the above, but it is not merely limited to the listed numerical values, and other unlisted numerical values within the numerical ranges are also applicable.

As an optional technical solution of the present disclosure, a mixing manner includes at least one of mechanical stirring, ultrasonic dispersion, and grinding dispersion. Certainly, it can be understood that, the mixing manner is not limited to the above manners, and any manner that can uniformly mix the pre-lithiated silicon oxygen material and the metal M-containing substance can be used.

Optionally, the mixing manner is ball milling and mixing, and ball milling time is 3 h~24 h, which may be, for example, 6 h~21 h, 9 h~17 h or 11 h~15 h, such as 3 h, 4 h, 5 h, 6 h, 8 h, 12 h, 16 h, 18 h, 20 h or 24 h, or an interval value between any two endpoint values in the above, but it is not merely limited to the listed numerical values, and other unlisted numerical values within the numerical ranges are also applicable. It can be understood that, sufficient ball milling can make the metal M-containing substance to be uniformly attached to the surface of the silicon oxygen material having undergone the surface etching treatment or the surface of the carbon-coated silicon oxygen material having undergone the surface etching treatment.

As an optional technical solution of the present disclosure, the protective atmosphere includes at least one of nitrogen gas, helium gas, neon gas, argon gas, krypton gas, and xenon gas.

In some embodiments, the solid-phase thermal reaction is a roasting treatment, wherein the roasting can be performed in a firing furnace, so that the roasting is fully performed.

Optionally, a temperature of the solid-phase thermal reaction is 600 ºC~1200 ºC, which may be, for example, 640 ºC~1160 ºC, 720 ºC~920 ºC or 780 ºC~820 ºC, such as 600 ºC, 700 ºC, 750 ºC, 800 ºC, 850 ºC, 900 ºC, 950 ºC, 1000 ºC, 1050 ºC, 1100 ºC, 1200 ºC, or an interval value between any two endpoint values in the above, but it is not merely limited to the listed numerical values, and other unlisted numerical values within the numerical ranges are also applicable, optionally, 750 ºC~1150 ºC. It can be understood that, when the reaction temperature is too high, the reaction will be violent, silicon grains will grow sharply, and the cycle performance of the material will be affected; and if the reaction temperature is too low, the skeleton of water-insoluble silicate on the surface layer of the silicon oxygen material having undergone the surface etching treatment cannot be generated.

Optionally, time of the solid-phase thermal reaction is 3 h~12 h, which may be, for example, 5 h~11 h, 6 h~9 h or 7 h~8 h, such as 3 h, 4 h, 5 h, 6 h, 7 h, 8 h, 9 h, 10 h, 11 h or 12 h, or an interval value between any two endpoint values in the above, but it is not merely limited to the listed numerical values, and other unlisted numerical values within the numerical ranges are also applicable. It can be understood that sufficient roasting can generate the skeleton of water-insoluble silicate on the surface layer of silicon oxygen material having undergone the surface etching treatment.

Optionally, a heating rate of the solid-phase thermal reaction is 1 ºC/min~5 ºC/min, which may be, for example, 1 ºC/min, 2 ºC/min, 3 ºC/min, 4 ºC/min or 5 ºC/min, or an interval value between any two endpoint values in the above, but it is not merely limited to the listed numerical values, and other unlisted numerical values within the numerical ranges are also applicable.

In the above solid-phase thermal reaction process, the metal M-containing substance reacts with the skeleton of silicon dioxide disproportionately exposed on the surface of the silicon oxygen material having undergone the surface etching treatment and the strongly alkaline lithium silicate, to generate the skeleton of water-insoluble silicate, which inhibits the electrolytic solution from easily passing through the surface of the negative electrode material and reacting with the lithium silicate inside the particles, can reduce the pH value of the material, further affects the pH value of the whole negative electrode slurry, and improves the processing stability of the pre-lithiated material, so that the first efficiency of the negative electrode material is improved.

Optionally, after step S20, the method further includes:
cooling and sieving the negative electrode material obtained from the solid-phase thermal reaction, so that the average particle size of the negative electrode material is 1 µm~10 µm, which may be, for example, 2.5 µm~9.5 µm, 3.5 µm~7 µm or 4.5 µm~6.5 µm, such as 1 µm, 2 µm, 3 µm, 4 µm, 6 µm, 7 µm, 8 µm, 9 µm or 10 µm, or an interval value between any two endpoint values in the above. With the average particle size of the negative electrode material being within the above ranges, it is beneficial to improving the cycle performance of the negative electrode material. Optionally, the average particle size of the negative electrode material is 4 µm~7 µm.

In some embodiments, the sieving includes at least one of crushing, ball milling, screening or classifying (grading).

For the negative electrode material prepared by the above preparation method, a waterproof layer formed by the skeleton of water-insoluble silicate and the silicon oxygen material embedded thereon can prevent the reaction of the strongly alkaline material with the solvent, inhibit the gas generation, and meanwhile reduce the influence on the capacity first efficiency of the material, and control the pH value of the negative electrode slurry prepared by the material. In the above, the active silicon oxygen material can remain embedded on the skeleton of silicate and the skeleton of lithium silicate, and the skeleton structure formed can stably play a role of buffering expansion, so that nano-silicon crystal grains are embedded in the whole particle system, and the silicon oxygen material can keep good contact with the conductive carbon layer, thus, the electrical conductivity is improved, and an interface impedance is reduced, which can ensure stability of conductive channels and lithium ion transmission channels inside the particles.

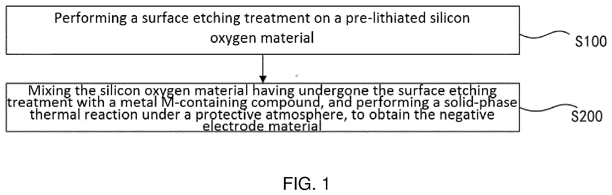

As shown in FIG. 1, an embodiment of the present disclosure provides a preparation method of a negative electrode material, including the following steps:
S100, performing a surface etching treatment on a pre-lithiated silicon oxygen material; and
S200, mixing the silicon oxygen material having undergone the surface etching treatment with a metal M-containing compound, and performing a solid-phase thermal reaction under a protective atmosphere, to obtain the negative electrode material.

In some embodiments, the silicon oxygen material having undergone the surface etching treatment can also be additionally mixed with a metal A-containing substance, wherein the metal A includes an alkali metal element, and optionally, the metal A includes at least one of Li, Na, and K.

The present disclosure provides a lithium ion battery, wherein the lithium ion battery contains the negative electrode material in the first aspect in the above or the negative electrode material prepared by the preparation method in the second aspect in the above.

For the negative electrode material provided in the present disclosure, the silicon oxygen material is embedded on the skeleton structure, and the skeleton of water-insoluble silicate on the outer layer is linked with the internal lithium silicate skeleton, which is beneficial to exerting electrochemical performance of the active material, performing the electron transfer and lithium deintercalation and intercalation quickly, reducing an internal resistance of the material, and improving lithium ion transfer capacity. By coating the silicon oxygen material with the skeleton of water-insoluble silicate located on the outer layer, contact of water with the strongly alkaline lithium silicate can be effectively blocked, and lithium silicate hydrolysis can be inhibited, thus effectively improving the gas generation of the material, realizing pH regulation of the material, and improving the processability. The inner lithium silicate and the outer water-insoluble silicate are tightly linked via the silicon and the silicon oxygen material, and the difference between work functions of the two silicate materials results in that after the two form a heterojunction interface, the electron transfer efficiency can be improved at the junction interface, thereby improving a lithium intercalation depth, and improving the capacity and cycle performance.

In another aspect, for the preparation method of a negative electrode material provided in the present disclosure, by performing the surface etching treatment on the pre-lithiated silicon oxygen material, the metal M-containing substance is made to have the solid-phase thermal reaction with the etched silicon oxygen material, so that the water-insoluble silicate is formed on the surface of the etched silicon oxygen material, which can effectively isolate soluble and strongly alkaline substances such as lithium silicate from dissolving in the slurry to cause uncontrolled pH, so as to inhibit the gas generation of the slurry, and can also prevent loss of active silicon oxygen material and active lithium, and improve the first efficiency capacity of the material; the lithium silicate and the water-insoluble silicate are silicates of different crystal forms grown and formed on the same silicon oxygen skeleton, can form a tight heterojunction interface, without forming a vacuum section, which is beneficial to electron transfer of the material between the heterojunction, improving the ionic conductivity of the material, and facilitating exertion of rate capability of the material. In addition, the whole preparation process is simple, facilitates mass production, and reduces costs.

### Example

Examples of the present disclosure are further described through multiple examples. The examples of the present disclosure are not limited to the following examples. Appropriate modifications can be made within the scope of protection.

### Example 1

(1) A carbon-coated silicon oxygen material SiO/C was made to react with lithium metal, to obtain a pre-lithiated carbon-coated silicon oxygen material Li~SiO/C, wherein a lithium content was 10 wt%;
(2) the pre-lithiated material was soaked in a 10 wt% citric acid solution for 1 h, subjected to surface etching, followed by suction filtration, and dried in a dry environment at 80 °C for 24 h; and
(3) magnesium oxide (5 g) and the pre-lithiated silicon monoxide (100 g) having undergone the surface etching were added to a ball mill, after 12 h of ball-milling, the resultant was transferred to a graphite crucible, treated for 10 h at 850 °C under a protective atmosphere, and then crushed, sieved, and classified (graded) to obtain the negative electrode material.

Referring to FIG. 3, which is a structural schematic diagram of the negative electrode material prepared in the present example, the negative electrode material includes an active material 100 and a carbon layer (i.e., a coating layer 200) formed on a surface of the active material, wherein the active material 100 includes a skeleton structure and a silicon oxygen material embedded on the skeleton structure; the skeleton structure includes a lithium silicate skeleton (i.e., lithium silicate 120) located inside the active material and a lithium magnesium silicate skeleton (i.e., water-insoluble silicate 140) located on a surface layer of the active material, and the magnesium silicate skeleton (the water-insoluble silicate 140) is linked with the lithium silicate skeleton. The lithium silicate skeleton (i.e., the lithium silicate 120) of the present example is Li₂Si₂O₅, Li₂SiO₃, and Li₄SiO₄, and the surface layer of the active material (i.e., the water-insoluble silicate 140) is Mg₂SiO₄ and Li₂MgSiO₄.

The negative electrode material had an average particle size (D₅₀) of 5.0 µm, a tap density of 0.98 g/cm³, and a specific surface area of 2.54 m²/g, a mass percentage content of lithium in the negative electrode material was 9.5 wt%, and the carbon layer had a thickness of 183 nm.

### Example 2

(1) A carbon-coated silicon oxygen material SiO/C was made to react with lithium metal, to obtain a pre-lithiated carbon-coated silicon oxygen material Li~SiO/C, wherein a lithium content was 10 wt%;
(2) the pre-lithiated material was soaked in a 10 wt% citric acid solution for 1 h, subjected to surface etching, followed by suction filtration, and dried in a dry environment at 80 °C for 24 h; and
(3) magnesium oxide (2.5 g), lithium carbonate (4.6 g), and the pre-lithiated silicon monoxide (100 g) having undergone the surface etching were added to a ball mill, after 12 h of ball-milling, the resultant was transferred to a graphite crucible, treated for 10 h at 850 °C under a protective atmosphere, and then crushed, sieved, and classified to obtain the negative electrode material.

Referring to FIG. 3, which is a structural schematic diagram of the negative electrode material prepared in the present example, the negative electrode material includes an active material 100 and a carbon layer (i.e., a coating layer 200) formed on a surface of the active material, wherein the active material 100 includes a skeleton structure and a silicon oxygen material embedded on the skeleton structure; the skeleton structure includes a lithium silicate skeleton (i.e., lithium silicate 120) located inside the active material and a lithium magnesium silicate skeleton (i.e., water-insoluble silicate 140) located on a surface layer of the active material, and the magnesium lithium silicate skeleton (the water-insoluble silicate 140) is linked with the lithium silicate skeleton. The lithium silicate skeleton (i.e., the lithium silicate 120) of the present example is Li₂Si₂O₅, Li₂SiO₃, and Li₄SiO₄, and the surface layer of the active material (i.e., the water-insoluble silicate 140) is Li₂MgSiO₄.

The negative electrode material prepared in the present example had an average particle size (D₅₀) of 5.0 µm, a tap density of 0.98 g/cm³, and a specific surface area of 2.54 m²/g, a mass percentage content of lithium in the negative electrode material was 9.5 wt%, and the carbon layer had a thickness of 183 nm.

### Example 3

(1) A carbon-coated silicon oxygen material SiO/C was made to react with lithium metal, to obtain a pre-lithiated carbon-coated silicon oxygen material Li~SiO/C, wherein a lithium content was 10 wt%;
(2) the pre-lithiated material was soaked in a 10 wt% citric acid solution for 1 h, subjected to surface etching, followed by suction filtration, and dried in a dry environment at 80 °C for 24 h; and
(3) magnesium powder (3 g) and the pre-lithiated silicon monoxide (100 g) having undergone the surface etching were added to a ball mill, after 12 h of ball-milling under an inert atmosphere, the resultant was transferred to a graphite crucible, treated for 10 h at 850 °C under a protective atmosphere, and then crushed, sieved, and classified (graded) to obtain the negative electrode material.

Referring to FIG. 3, which is a structural schematic diagram of the negative electrode material prepared in the present example, the negative electrode material includes an active material 100 and a carbon layer (i.e., a coating layer 200) formed on a surface of the active material, wherein the active material 100 includes a skeleton structure and a silicon oxygen material embedded on the skeleton structure; the skeleton structure includes a lithium silicate skeleton (i.e., lithium silicate 120) located inside the active material and a lithium magnesium silicate skeleton (i.e., water-insoluble silicate 140) located on a surface layer of the active material, and the magnesium silicate skeleton (the water-insoluble silicate 140) is linked with the lithium silicate skeleton. The lithium silicate skeleton (i.e., the lithium silicate 120) of the present example is Li₂Si₂O₅, Li₂SiO₃, and Li₄SiO₄, and the surface layer of the active material (i.e., the water-insoluble silicate 140) is Mg₂SiO₄, MgSiOs, and Li₂MgSiO₄.

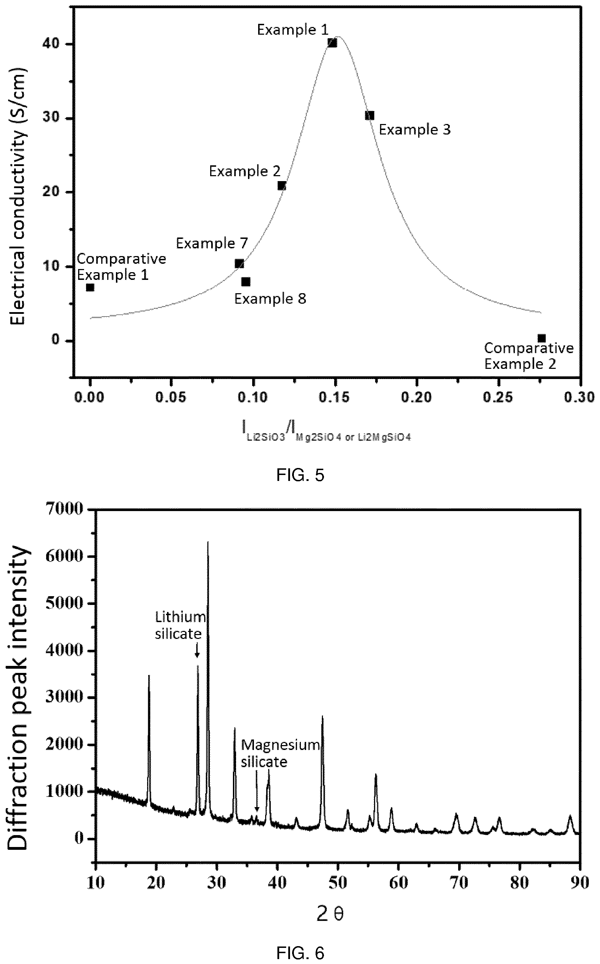

The negative electrode material prepared in the present example had an average particle size (D₅₀) of 5.0 µm, a tap density of 0.98 g/cm³, and a specific surface area of 2.54 m²/g, a mass percentage content of lithium in the negative electrode material was 9.5 wt%, and the carbon layer had a thickness of 183 nm. See FIG. 6 for an XRD diffraction pattern of the negative electrode material prepared in the present example.

### Example 4

Step (1) is similar to that in Example 1, and a difference lies in that the lithium content was 11 wt%;
step (2) is similar to that in Example 1, and a difference lies in that the pre-lithiated material was soaked in a 12 wt% acetic acid solution for 1.2 h; and
in step (3), Al₂O₃ (7.5 g) and the pre-lithiated silicon monoxide (100 g) having undergone the surface etching were added to a ball mill, after 10 h of ball-milling, the resultant was transferred to a graphite crucible, treated for 10 h at 850 °C under a protective atmosphere, and then crushed, sieved, and classified (graded) to obtain the negative electrode material.

Referring to FIG. 3, which is a structural schematic diagram of the negative electrode material prepared in the present example, the negative electrode material includes an active material 100 and a carbon layer (i.e., a coating layer 200) formed on a surface of the active material, wherein the active material 100 includes a skeleton structure and a silicon oxygen material embedded on the skeleton structure; the skeleton structure includes a lithium silicate skeleton (i.e., lithium silicate 120) located inside the active material and a lithium aluminum silicate skeleton (i.e., water-insoluble silicate 140) located on a surface layer of the active material, and the aluminum lithium silicate skeleton (the water-insoluble silicate 140) is linked with the lithium silicate skeleton. The lithium silicate skeleton (i.e., the lithium silicate 120) of the present example is Li₂Si₂O₅, Li₂SiO₃, and Li₄SiO₄, and the surface layer of the active material (i.e., the water-insoluble silicate 140) is Al₂SiO₅, LiAlSiO₄, LiAlSi₂O₆, and LiAlSi₃O₈.

The negative electrode material prepared in the present example had an average particle size (D₅₀) of 5.0 µm, a tap density of 0.98 g/cm³, and a specific surface area of 2.77 m²/g, a mass percentage content of lithium in the negative electrode material was 9.6 wt%, and the carbon layer had a thickness of 177 nm.

### Example 5

Step (1) is similar to that in Example 1, and a difference lies in that the lithium content was 11 wt%;
step (2) is similar to that in Example 1, and a difference lies in that the pre-lithiated material was soaked in a 1 wt% nitric acid solution for 0.5 h; and
in step (3), Na₂CO₃ (8 g) and the pre-lithiated silicon monoxide (100 g) having undergone the surface etching were added to a ball mill, after 10 h of ball-milling, the resultant was transferred to a graphite crucible, treated for 10 h at 850 °C under a protective atmosphere, and then crushed, sieved, and classified (graded) to obtain the negative electrode material.

Referring to FIG. 3, which is a structural schematic diagram of the negative electrode material prepared in the present example, the negative electrode material includes an active material 100 and a carbon layer (i.e., a coating layer 200) formed on a surface of the active material, wherein the active material 100 includes a skeleton structure and a silicon oxygen material embedded on the skeleton structure; the skeleton structure includes a lithium silicate skeleton (i.e., lithium silicate 120) located inside the active material and a lithium sodium silicate skeleton (i.e., water-insoluble silicate 140) located on a surface layer of the active material, and the sodium lithium silicate skeleton (the water-insoluble silicate 140) is linked with the lithium silicate skeleton. The lithium silicate skeleton (i.e., the lithium silicate 120) of the present example is Li₂Si₂O₅, Li₂SiO₃, and Li₄SiO₄, and the surface layer of the active material (i.e., the water-insoluble silicate 140) is LiNaSiO₄.

The negative electrode material prepared in the present example had an average particle size (D₅₀) of 5.0 µm, a tap density of 1.00 g/cm³, and a specific surface area of 2.79 m²/g, a mass percentage content of lithium in the negative electrode material was 10.0 wt%, and the carbon layer had a thickness of 193 nm.

### Example 6

Step (1) is similar to that in Example 1, but a difference lies in making a silicon oxygen material SiO_{0.75}/C with a silicon content of 65% react with lithium metal, to obtain a pre-lithiated carbon-coated silicon oxygen material Li~SiO_{0.75}//C, wherein a lithium content was 10 wt%; and
other steps are the same as those in Example 1.

Referring to FIG. 3, which is a structural schematic diagram of the negative electrode material prepared in the present example, the negative electrode material includes an active material 100 and a carbon layer (i.e., a coating layer 200) formed on a surface of the active material, wherein the active material 100 includes a skeleton structure and a silicon oxygen material embedded on the skeleton structure; the skeleton structure includes a lithium silicate skeleton (i.e., lithium silicate 120) located inside the active material and a magnesium silicate skeleton (i.e., water-insoluble silicate 140) located on a surface layer of the active material, and the magnesium silicate skeleton (the water-insoluble silicate 140) is linked with the lithium silicate skeleton. The lithium silicate skeleton (i.e., the lithium silicate 120) of the present example is Li₂Si₂O₅, Li₂SiO₃, and Li₄SiO₄, and the surface layer of the active material (i.e., the water-insoluble silicate 140) is Mg₂SiO₄, MgSiOs, and Li₂MgSiO₄.

The negative electrode material prepared in the present example had an average particle size (D₅₀) of 5.0 µm, a tap density of 1.1 g/cm³, and a specific surface area of 2.47 m²/g, a mass percentage content of lithium in the negative electrode material was 9.5 wt%, and the carbon layer had a thickness of 187 nm.

### Example 7

(1) A carbon-coated silicon oxygen material SiO/C was made to react with lithium metal, to obtain a pre-lithiated carbon-coated silicon oxygen material Li~SiO/C, wherein a lithium content was 10 wt%;
(2) the pre-lithiated material was soaked in a 10 wt% citric acid solution for 1 h, subjected to surface etching, followed by suction filtration, and dried in a dry environment at 80 °C for 24 h; and
(3) magnesium oxide (5 g) and the pre-lithiated silicon monoxide (100 g) having undergone the surface etching were added to a ball mill, after 12 h of ball-milling, the resultant was transferred to a graphite crucible, treated for 10 h at 550 °C under a protective atmosphere, and then crushed, sieved, and classified (graded) to obtain the negative electrode material.

The negative electrode material prepared in the present example included a mixture of active material and magnesium oxide.

The negative electrode material prepared in the present example had an average particle size (D₅₀) of 5.0 µm, a tap density of 0.98 g/cm³, and a specific surface area of 2.54 m²/g, a mass percentage content of lithium in the negative electrode material was 9.5 wt%, and the carbon layer had a thickness of 183 nm.

### Example 8

(1) A carbon-coated silicon oxygen material SiO/C was made to react with lithium metal, to obtain a pre-lithiated carbon-coated silicon oxygen material Li~SiO/C, wherein a lithium content was 10 wt%;
(2) the pre-lithiated material was soaked in a 10 wt% citric acid solution for 1 h, subjected to surface etching, followed by suction filtration, and dried in a dry environment at 80 °C for 24 h; and
(3) magnesium oxide (0.5 g) and the pre-lithiated silicon monoxide (100 g) having undergone the surface etching were added to a ball mill, after 12 h of ball-milling under an inert atmosphere, the resultant was transferred to a graphite crucible, treated for 10 h at 850 °C under a protective atmosphere, and then crushed, sieved, and classified (graded) to obtain the negative electrode material.

The negative electrode material prepared in the present example included a mixture of active material and magnesium oxide.

The negative electrode material prepared in the present example had an average particle size (D₅₀) of 5.0 µm, a tap density of 0.98 g/cm³, and a specific surface area of 2.54 m²/g, a mass percentage content of lithium in the negative electrode material was 9.5 wt%, and the carbon layer had a thickness of 183 nm.

### Example 9

Steps (1) to (2) are the same as those in Example 8.

Step (3) is similar to that in Example 8, but a difference lies in that an addition amount of magnesium oxide was 11g.

The negative electrode material prepared in the present example included a mixture of active material and magnesium oxide.

The negative electrode material prepared in the present example had an average particle size (D₅₀) of 5.0 µm, a tap density of 0.89 g/cm³, and a specific surface area of 3.2 m²/g, a mass percentage content of lithium in the negative electrode material was 9.2 wt%, and the carbon layer had a thickness of 187 nm.

### Example 10

The preparation method is similar to Example 1, but a difference lies in making a silicon oxygen material SiO react with lithium metal in step (1), to obtain a pre-lithiated silicon oxygen material Li~SiO; and
the negative electrode material had an average particle size (D₅₀) of 5.0 µm, a tap density of 0.98 g/cm³, and a specific surface area of 3.01 m²/g, a mass percentage content of lithium in the negative electrode material was 10 wt%, without a carbon layer.

### Example 11

The preparation method is similar to Example 1, but a difference lies in that the soaking time in the citric acid solution was 30 min in step (2); and
the negative electrode material had an average particle size (D₅₀) of 5.0 µm, a tap density of 0.98 g/cm³, and a specific surface area of 2.74 m²/g, a mass percentage content of lithium in the negative electrode material was 9.5 wt%, and the carbon layer had a thickness of 189 nm.

### Comparative Example 1

The pre-lithiated carbon-coated silicon oxygen material SiO-Li/C was taken as the negative electrode material, with an average particle size (D₅₀) of 5.14 µm, a tap density of 0.98 g/cm³, a specific surface area of 3.24 m²/g, and a carbon content of 5.0 wt%.

### Comparative Example 2

11.9 g of MgCl₂ (corresponding to a molar amount of 5 g of MgO) solution was dissolved in 500 ml of pure water, after complete dissolution, 100 g of SiO-Li/C (Comparative Example 1) was added to the solution, and the mixture was fully stirred for 10 min; after the stirring, suction filtration was performed, solvent was separated, to obtain SiO-Li/Mg(OH)₂/C, which was placed in a box furnace, and subjected to high-temperature treatment at 800 °C for 6 h under protection of Ar gas, and then the resultant was crushed and classified (graded) to obtain the negative electrode material.

It should be noted that MgCl₂ can form magnesium hydroxide colloid or precipitate in an alkaline environment, which is uniformly coated around periphery of the carbon-coated pre-lithiated material SiO-Li/C powder. During a calcination process, MgO may partially react with SiO₂ and other silicate skeleton to generate magnesium-containing silicate, and other MgO may be evenly distributed and coated on the entire inner core to form an MgO coating layer, which may form a multi-layer coated core-shell structure with an outermost carbon coating layer.

The negative electrode material prepared in the present comparative example had an average particle size (D₅₀) of 5.17 µm, a tap density of 0.98 g/cm³, a specific surface area of 3.40 m²/g, a porosity of 2.17 wt%, and a carbon content of 5.0 wt%.

### Testing Method

### 1. Electrical performance test

The negative electrode materials obtained in Examples 1~11 (S1~S11) and Comparative Examples 1~2 (R1∼R2) and artificial graphite were taken as the negative electrode active materials, and were uniformly mixed according to a mass ratio of SiO:graphite:CMC:SBR:SP:KS-6=9.2:82.8:2:2:2:2, then coated on a copper foil current collector, and dried to obtain a negative electrode plate for later use.

First, a button battery test was performed on the obtained electrode plate. A battery was assembled in an argon glove box, where a metal lithium sheet was taken as a negative electrode, an electrolytic solution was 1 mol/L of LiPF6+EC+EMC, a separator was a polyethylene/polypropylene composite microporous membrane, the electrochemical performance was tested on a battery tester, a battery capacity was set as standard 480 mAh/g, a charging-discharging voltage was 0.01-1.5 V, and a charging-discharging rate was 0.1 C, to perform the charging and discharging test, and obtain the first reversible capacity, first-cycle charging capacity, and first-cycle discharging capacity. Initial Coulombic efficiency = first-cycle discharging capacity/first-cycle charging capacity.

50 cycles were repeated, and a thickness of the electrode plate of the lithium ion battery was measured at this time by a micrometer to be H1, and an expansion rate of the electrode plate was (H1-H0)/H0×100wt% after 50 cycles.

50 cycles were repeated, and the discharging capacity was recorded as remaining capacity of the lithium ion battery, wherein capacity retention ratio=remaining capacity/initial capacity*100%. 2. Testing method of average particle size of the negative electrode material:

### 2. Test of particle size

Malvern Mastersizer 2000 laser particle size tester was used to test the particle size of the negative electrode material, to obtain the average particle size.

3. Testing method of the specific surface area of the negative electrode material:
a specific surface area test was performed on the negative electrode material using a Micrometritics Tristar3020 specific surface area and aperture analyzer. A certain mass of powder was weighed, and completely degassed in a vacuum heating state, and after surface adsorbate was removed, the specific surface area of particles were calculated through an amount of nitrogen adsorbed by a nitrogen adsorption method.

4. Porosity test of the negative electrode material:
the porosity of the negative electrode material was tested by a gas replacement method. Calculation method is as follows: percentage of sample pore volume in total area, P=(V₀-V)/V₀*100 wt%, where V₀ is a volume of the material in a natural state, or referred to as apparent volume, in unit of cm³ or m³, and V is an absolute compact volume of material, in unit of cm³ or m³.

5. Tap density test of the negative electrode material:
The National Standard GB/T 5162-2006 *Metallic powders-Determination of tap density* was used.

6. Test of carbon content of the negative electrode material:
a sample of the negative electrode material was heated and burnt at a high temperature by a high-frequency furnace under an oxygen-rich condition, so that carbon was oxidized into carbon dioxide. The gas was treated and then entered a corresponding absorption cell, and corresponding infrared radiation was absorbed and then converted into corresponding signal by a detector. The signal was sampled by computer, linearly corrected and then converted into a numerical value directly proportional to carbon dioxide concentration, and then values of the whole analyzing process were accumulated. After the analysis was completed, the accumulated value was divided by a weight value in the computer, and then multiplied by a correction coefficient, and blank was removed, then a percentage content of carbon in the sample could be obtained. The sample was tested using a high-frequency infrared carbon sulfur analyzer (Model No. is HCS-140 from Shanghai Dekai).

7. Test of lithium content in an aqueous solution of the negative electrode material:
a sample of the negative electrode material was soaked in deionized water (a proportion of material to water was 50 wt%), stirred for 24 hours, and then left to stand, and after the material and the liquid were layered, a supernatant was taken for ICP test, to obtain the lithium content.

8. XRD test of the negative electrode material:
XRD test was performed directly using the negative electrode material sample.

9. Band gap test of the negative electrode material:
the negative electrode material sample was directly used to perform an ultraviolet-visible diffuse reflection spectrum test to obtain a spectrum, then a spectral curve was integrated to obtain an extreme wavelength, and then Eg was obtained through a formula Eg=1240/λ.

### 10. Test of pH value

The pH value was pH value of the slurry.

### 11. Gas generation test

After slurry mixing was completed, 4 ml of the slurry was extracted into a sealed syringe (a small syringe with a measuring range of 10 ml), and 8 hours later, a change value of a gas volume of the slurry in the syringe was observed.

### 12. Testing method of lithium element

(i) A content (expressed in pm) of the lithium element in the water-insoluble silicate in the negative electrode material was determined by a testing method as follows:
   weighing about 0.5 g of the negative electrode material sample in a platinum crucible, firing the sample at 750 °C for 2 h until complete firing of carbon element, then adding 4 mL of HNOs, after reaction of the acid with the sample was stable, heating the platinum crucible on a 350 °C electric hot plate until hydrofluoric acid volatilized and no white smoke was generated, after the crucible was cooled, adding 6 mL of HCl, heating the mixture until residues were completely dissolved, finally fixing the volume in a 100-mL plastic volumetric flask, and performing the test by an ICP spectrometer to obtain a concentration of the lithium element.
(ii) A total lithium content (expressed in p_{Li}) in the negative electrode material was determined by a testing method as follows: the method is similar to the above method (i), but a difference lies in that 6 mL of HF was additionally added while adding HNOs, and 4 mL of HNOs and 6 mL of HF were mixed and reacted.

**Table 1. Statistical Table of Test Results**

| Sample | Powder electrical conductivity (S/cm) | Li in solution (ppm) | Band gap (eV) | I_{B}/I_{A} | pm/p_{Li} | Processability | | |
|---|---|---|---|---|---|---|---|---|
| | | | | | | PH value | Whether generate gas within 24 h | Gas generation within 24 h (ml) |
| S1 | 40.21 | 7 | 0.63 | 0.148 | 0.31 | 10.17 | No | 0 |
| S2 | 20.97 | 19 | 0.78 | 0.127 | 0.22 | 10.75 | No | 0 |
| S3 | 30.39 | 37 | 0.73 | 0.171 | 0.25 | 9.93 | No | 0 |
| S4 | 35.71 | 12 | 0.83 | 0.169 | 0.47 | 10.02 | No | 0 |
| S5 | 19.33 | 138 | 0.92 | 0.112 | 0.53 | 10.92 | No | 0 |
| S6 | 42.19 | 10 | 0.54 | 0.1 | 0.29 | 10.33 | No | 0 |
| S7 | 10.48 | 1931 | 1.02 | 0.091 | 0.87 | 11.53 | Yes | 19 |
| S8 | 8.01 | 2033 | 1.18 | 0.095 | 0.85 | 10.10 | Yes | 15 |
| S9 | 9.83 | 17 | 0.92 | 0.19 | 0.23 | 10.2 | No | 0 |
| S10 | 0.17 | 1198 | 1.12 | 20.3 | 1.2 | 9.7 | No | 0 |
| S11 | 15.12 | 3470 | 0.69 | 0.112 | 0.55 | 11.13 | Yes | 11 |
| R1 | 7.21 | 2213 | 0.93 | 0 | 0.91 | 11.87 | Yes | 37 |
| R2 | 0.37 | 11 | 0.82 | 0.276 | 0.17 | 10.24 | Yes | 21 |

**Table 2**

| Sample | First efficiency (%) | Reversible capacity (mAh/g) | 0.5C/0.2C charging rate (%) | 1.0C/0.2C charging rate (%) | 2.0C/0.2C charging rate (%) | 50-cycle capacity retention ratio (%) |
|---|---|---|---|---|---|---|
| S1 | 90.27 | 1393.7 | 99.87 | 91.47 | 82.45 | 93.1 |
| S2 | 90.35 | 1332.5 | 98.89 | 90.61 | 81.51 | 91.7 |
| S3 | 91.33 | 1375.9 | 99.50 | 91.41 | 81.82 | 92.1 |
| S4 | 90.98 | 1381.2 | 99.52 | 91.39 | 82.00 | 92.6 |
| S5 | 90.20 | 1323.9 | 98.59 | 90.66 | 81.50 | 88.7 |
| S6 | 91.01 | 1453.2 | 99.79 | 92.00 | 82.31 | 89.9 |
| S7 | 90.13 | 1309.9 | 97.79 | 90.51 | 81.47 | 81.3 |
| S8 | 90.30 | 1279.9 | 96.77 | 89.37 | 80.91 | 80.9 |
| S9 | 89.21 | 1207.3 | 98.33 | 90.21 | 80.32 | 79.2 |
| S10 | 83.7 | 1328.2 | 93.7 | 89.0 | 79.70 | 78.3 |
| S11 | 90.23 | 1327.2 | 97.2 | 91.5 | 80.5 | 82.77 |
| R1 | 90.22 | 1373.6 | 98.00 | 90.15 | 80.23 | 78.7 |
| R2 | 90.09 | 1135.8 | 92.25 | 88.31 | 79.63 | 78.1 |

It can be seen from Table 1 and Table 2 in combination and with reference to FIG. 4 and FIG. 5 that for the negative electrode material provided in Examples 1∼3, the silicon oxygen material is embedded on the skeleton structure, the skeleton of water-insoluble silicate on the outer layer is linked with the internal lithium silicate skeleton, which is beneficial to exerting electrochemical performance of the active material, performing electron transfer and lithium deintercalation and intercalation quickly, reducing an internal resistance of the material, and improving lithium ion transfer capacity. By coating the silicon oxygen material with the skeleton of water-insoluble silicate located on the outer layer, contact of water with the strongly alkaline lithium silicate can be effectively blocked, and lithium silicate hydrolysis is inhibited, thus effectively improving the gas generation of the material, and realizing pH regulation of the material. The lithium ions can be conducted through the skeleton structure and the silicon oxygen material on the surface of the active material, thus improving the ionic conductivity of the material, and being beneficial to the exertion of the rate capability of the material. See FIGS. 4-6 for comparison of performance data of some examples and comparative examples.

In Example 1, by forming the stable heterojunction interface by the water-insoluble silicate and lithium silicate grown *in situ* on the SiO₂ skeleton, the electrical conductivity of the material is improved to a certain extent, reaching 40.21 S/cm.

In Example 2, the magnesium oxide material, through the ball milling and solid-phase reaction, reacts with the SiO₂ skeleton and the strongly alkaline lithium silicate skeleton of the outer layer, materials such as insoluble magnesium silicate salt (or lithium magnesium silicate) are generated, and the work function of magnesium lithium silicate is close to that of lithium silicate, although the powder electrical conductivity of the material is reduced to a certain extent compared with Example 1, reaching 20.97 S/cm, better performance is rendered on the rate, improved by about 1.5%~2.0% at each rate compared with Comparative Example 1, indicating that the electrical conductivity improvement brought about by the heterojunction has a great promoting effect on the rate improvement.

In Example 3, magnesium powder is used, a redox reaction occurs on the surface and generates MgO and SiO₂, thus further improving the capacity and the first efficiency, and MgO reacts with SiO₂ to form the water-insoluble silicate (magnesium silicate), which can isolate the slurry from the strongly alkaline silicate. However, since Mg reduces the SiO₂ skeleton, part of the silicon oxygen material extended out by lithium silicate is destroyed, and a tight water-insoluble silicate interface is formed on a part of the surface of the material particles. Therefore, the powder electrical conductivity in Example 3 is slightly lower than that in Example 1. According to the XRD data of Example 3 (FIG. 6), it can be found that the composite negative electrode material contains only three components, i.e., Si/lithium silicate/magnesium silicate, and through the combination of the three materials and considering the lithium content in the dissolving solution, it can be found that a trace amount of magnesium silicate is concentrated on the surface of the composite negative electrode material particles, and a new silicate interface forms a heterojunction structure, thus the powder electrical conductivity thereof is far greater than that of lithium silicate/silicon and magnesium silicate/silicon samples (0.1-10 S/cm), thus the heterojunction structure on the surface of the composite negative electrode material particles can be found.

Moreover, it can be seen from the UV-vis characterization test results of Examples 1 to 3 that band gaps of Examples 1, 2, and 3 are respectively 0.63 eV, 0.78 eV, and 0.73 eV, which indicates that the heterojunction changes the energy band and improves the electrical conductivity, and the formation of the heterojunction facilitates improvement on the electrochemical performance of the material.

Meanwhile, Al₂O₃ is used in Example 4, and Na₂COs is used in Example 5, and they are respectively grown *in situ* into water-insoluble silicate on the silicon oxide and form a stable heterojunction interface with lithium silicate, which also enables the electrochemical performance of the material to be improved to some extent. In Example 6, by using a silicon oxide material with a silicon content of 65% and magnesium oxide, the water-insoluble silicate can also be grown *in situ* on the oxide of silicon and forms a stable heterojunction interface with lithium silicate, and the negative electrode material with high electrochemical performance can be obtained. According to Examples 1 to 9 and Comparative Examples 1~2, it can be seen that by comparing intensities of the strongest diffraction peaks of soluble lithium silicate and water-insoluble silicate (e.g. magnesium silicate) through XRD, a higher electrochemical performance than that in the comparative examples can be obtained with I_{B}/I_{A} of Examples 1 to 9 within the scope of the present disclosure.

In addition, when I_{B}/I_{A}0.10 or above, the dissolved lithium content of the negative electrode material is sharply reduced, and the stable water-insoluble silicate on the outer layer of the negative electrode material has been formed so that the gas generation of the negative electrode material can be further effectively inhibited. Optionally, 0.12≤I_{B}/I_{A}≤0.18. Since the water-insoluble silicate (such as magnesium silicate) will weaken the effect of the heterojunction interface after being accumulated on the surface layer, the electrical conductivity instead approaches that of the water-insoluble silicate (such as magnesium silicate), thus reducing the powder electrical conductivity, and in turn affecting the electrochemical level of the material.

For the conventional pre-lithiated material in Comparative Example 1, the powder electrical conductivity of the material is relatively low, which is because the silicon-based material and the lithium silicate themselves are insulators or semiconductors, and have relatively poor electrical conductivity as a core material. Therefore, it can be found from the powder electrical conductivity characterization that the powder electrical conductivity is 7.21 S/cm, while the powder electrical conductivity of the conventional graphite negative electrode material is 250 S/cm or more, and even if conductive carbon coating is performed on the surface, there is still a huge difference in the electrical conductivity thereof from the graphite negative electrode material.

In Comparative Example 2, the surface of granular carbon is coated with a magnesium oxide coating layer by a deposition method, the magnesium oxide coating layer is deposited on an outer layer of the conductive layer, and the conductive carbon layer is covered by the magnesium oxide coating layer, thus reducing the contact of the conductive carbon layer structure with a conductive agent. Therefore, the powder electrical conductivity thereof is obviously reduced (0.37 S/cm). Moreover, the capacity retention ratio of a battery fabricated with the material at a rate of 0.5 C, 1 C, and 2 C is respectively decreased by more than 3% compared with Comparative Example 1.

Compared with Example 7, in Examples 1-6 of the present disclosure, when a treatment temperature is maintained within the scope of the present disclosure, the high-efficiency reaction of the silicon oxygen material having undergone the surface etching treatment with the M- or A-containing compound can be effectively ensured, not only realizing the pH regulation of the material and avoiding the occurrence of gas generation, but also meanwhile effectively improving the powder electrical conductivity and rate performance, which indicates that a more stable heterojunction structure is formed. In Example 7, because the treatment temperature is relatively low, the lithium silicate and the SiO₂ skeleton on the surface react slowly with magnesium oxide, which results in the occurrence of gas generation, but the gas generation amount is significantly lower than that in the comparative example, and at the same time, the powder electrical conductivity is improved compared with that in the comparative example, and the rate capability is lower than that in Example 1, indicating that the heterojunction structure has been formed.

Meanwhile, the cycle capacity retention ratio of the battery also has a certain relationship with the heterojunction structure in the negative electrode material. Referring to FIG. 4, in both Examples 1 and 2 with good electrical conductivity, 50-cycle capacity retention ratio is 90% or more, in contrast, in Comparative Example 1 without heterojunction structure, the 50-cycle capacity retention ratio is reduced by about 10%, while in Comparative Example 2, since the surface is coated with magnesium oxide, the electrical conductivity is decreased, and the capacity cannot be exhibited, resulting in decrease in the electrochemical performance.

According to the concentration data of Li in the material solution in the examples and comparative examples, it can be found that in the three samples of Example 1, Example 2, and Example 3, lithium ions are lower than 20 ppm in the solutions thereof, which belongs to an error range, thus it can be proved that the surface layers of the three samples are completely free of soluble lithium silicate, while in Comparative Example 1, as a standard pre-lithiated sample, the lithium content in the solution thereof is 2000 ppm or more, indicating that if no treatment is performed, soluble lithium silicate will dissolve in the solvent, and a part of lithium silicate is hydrolyzed to raise the pH.

Meanwhile, in Examples 1-6 of the present disclosure, the range of pm/p_{Li} is within the range of the present disclosure, which can further ensure the high mass-charge conductivity of the material, further effectively inhibit the basicity of the material, and prevent the negative electrode material from generating gas during processing, thereby further improving the first efficiency and cycle stability of the battery.

The applicant declares that the examples described in the present description are intended to explain the present disclosure, specific substances, formulation proportions, and reaction conditions mentioned are merely specific examples of the substances, formulation proportions, and reaction conditions mentioned in the above of the present disclosure, rather than further limiting the present disclosure, i.e., not meaning that the present disclosure must rely on the above detailed methods to implement. A person skilled in the art should know that all technologies realized on the basis of the above contents of the present disclosure belong to the scope of the present disclosure, and any improvement on the present disclosure, equivalent substitutions of various raw materials and addition of auxiliary components of product of the present disclosure, selection of a specific mode, and the like, all fall within the scope of protection and the disclosed scope of the present disclosure.

### Industrial Applicability

The negative electrode material provided in the present disclosure can improve the processability, has excellent electrochemical cycle and expansion inhibition performances, and can prolong the service lifetime of the lithium ion battery, and moreover, the preparation method is simple, has low costs, is easy to realize industrial production, and therefore has excellent industrial applicability.

## Claims

1. A negative electrode material, **characterized in that** the negative electrode material comprises an active material, the active material comprises a skeleton structure that runs throughout the active material and a silicon oxygen material embedded on the skeleton structure, wherein the skeleton structure comprises a skeleton of lithium silicate located inside the active material and a skeleton of water-insoluble silicate located on a surface layer of the active material, and the skeleton of water-insoluble silicate is linked with the skeleton of lithium silicate, wherein
in an XRD pattern of the negative electrode material, an intensity of a strongest diffraction characteristic peak of the lithium silicate is I_{A}, and an intensity of a strongest diffraction characteristic peak of the water-insoluble silicate is I_{B}, and 0.03≤I_{B}/I_{A}≤0.2.

2. A negative electrode material, **characterized in that** the negative electrode material comprises an active material;
the active material comprises lithium silicate, water-insoluble silicate, and a silicon oxygen material, wherein
the water-insoluble silicate is coated on a surface of the lithium silicate; and
the lithium silicate and/or the water-insoluble silicate contains the silicon oxygen material, wherein
in an XRD pattern of the negative electrode material, an intensity of a strongest diffraction characteristic peak of the lithium silicate is I_{A}, and an intensity of a strongest diffraction characteristic peak of the water-insoluble silicate is I_{B}, and 0.03≤I_{B}/I_{A}≤0.2.

3. The negative electrode material according to claim 1 or 2, satisfying at least one of conditions a~g below:
a. the silicon oxygen material is SiOₙ, where 0.5 ≤n≤1.5;
b. the lithium silicate comprises at least one of Li₂SiO₃, Li₂Si₂O₅, Li₄SiO₄, Li₂Si₃O₇, Li₈SiO₆, Li₆Si₂O₇, Li₄Si₂O₇, Li₂Si₄O₇, and LiSiO₃;
c. the water-insoluble silicate comprises zA₂O·MO_{y}·xSiO₂, where M comprises at least one of Mg, Al, Ca, Ge, Cr, V, Ti, Sc, Co, Ni, Cu, Sr, Zn, Zr, Fe, and Mn, A comprises at least one of Li, Na, and K, 0.2≤x≤10.0, 1.0≤y≤3.0, and 0≤z≤5.0;
d. the water-insoluble silicate further comprises A₂O▪nSiO₂, wherein A comprises at least one of Li, Na, and K, and 1≤n≤10;
e. a work function range of the water-insoluble silicate is 2.5 eV≤η≤7.0 eV;
f. the water-insoluble silicate is located in a depth region of 20 nm~50 nm of a surface of the active material; and
g. a mass content of Li element in the water-insoluble silicate is W₁%, and a content of Li element in the lithium silicate is W₂%, and W₂>W₁≥0.

4. The negative electrode material according to any one of claims 1-3, satisfying at least one of conditions a~j below:
a. the negative electrode material further comprises a carbon layer existing on a surface of the active material;
b. an average thickness of the carbon layer is 30 nm~500 nm;
c. a tap density of the negative electrode material is 0.6 g/cm³~1.2 g/cm³;
d. a specific surface area of the negative electrode material is 1.0 m²/g~12.0 m²/g;
e. an average particle size of the negative electrode material is 3.0 µm~12.0 µm;
f. a mass percentage content of carbon in the negative electrode material is 1.5 wt%~10.0 wt%;
g. a mass percentage content of lithium in the negative electrode material is 3 wt%~15 wt%;
h. pH of the negative electrode material is 8.5-12.0; and
i. in the XRD pattern of the negative electrode material, the intensity of the strongest diffraction characteristic peak of the lithium silicate is I_{A}, and the intensity of the strongest diffraction characteristic peak of the water-insoluble silicate is I_{B}, and 0.12≤I_{B}/I_{A}≤0.18; and
j. a content of lithium element in the water-insoluble silicate of the negative electrode material is pm, and a total content of lithium element in the negative electrode material is p_{Li}, where 0.01≤pm/p_{Li}≤0.6.

5. A preparation method of a negative electrode material, **characterized by** comprising steps of:
performing a surface etching treatment on a pre-lithiated silicon oxygen material; and
mixing the silicon oxygen material having undergone the surface etching treatment with a metal M- and/or metal A-containing substance, and performing a solid-phase thermal reaction under a protective atmosphere, to obtain the negative electrode material.

6. The method according to claim 5, satisfying at least one of conditions i∼iv below:
(i) the metal A-containing substance comprises at least one of an elemental metal A, a carbonate of metal A, an oxide of metal A, and a hydroxide of metal A, wherein A comprises at least one of Li, Na, and K;
(ii) the metal M-containing substance comprises at least one of an elemental metal M, a carbonate of metal M, an oxide of metal M, and a hydroxide of metal M, where M comprises at least one of Mg, Al, Ca, Ge, Cr, Pb, Sr, Zn, Zr, Fe, and Mn;
(iii) a mass ratio of the silicon oxygen material having undergone the surface etching treatment to the metal M- and/or metal-A containing substance is 1 :(0.01 ~0.1); and
(iv) a mass ratio of the silicon oxygen material having undergone the surface etching treatment to the metal M- and/or metal-A containing substance is 1:(0.075-0.1).

7. A preparation method of a negative electrode material, **characterized by** comprising steps of:
performing a surface etching treatment on a pre-lithiated silicon oxygen material; and
mixing the silicon oxygen material having undergone the surface etching treatment with a metal M-containing compound, and performing a solid-phase thermal reaction under a protective atmosphere, to obtain the negative electrode material.

8. The method according to claim 7, satisfying at least one of conditions a~d below:
a. the metal M-containing compound comprises at least one of a carbonate of metal M, an oxide of metal M, and a hydroxide of metal M, where M comprises at least one of Mg, Al, Ca, Ge, Cr, Pb, Sr, Zn, Zr, Fe, and Mn;
b. a mass ratio of the silicon oxygen material having undergone the surface etching treatment to the metal M-containing compound is 1:(0.01~0.1);
c. a mass ratio of the silicon oxygen material having undergone the surface etching treatment to the metal M-containing compound is 1 :(0.075-0.1); and
d. the metal M-containing compound is an oxide of metal M.

9. The method according to any one of claims 5-8, satisfying at least one of conditions a~f below:
a. the mixing comprises at least one of mechanical stirring, ultrasonic dispersion, and grinding dispersion;
b. the mixing is ball milling and mixing, and a ball milling time is 3 h~24 h;
c. a gas of the protective atmosphere comprises at least one of nitrogen gas, helium gas, neon gas, argon gas, krypton gas, and xenon gas;
d. a temperature of the solid-phase thermal reaction is 600 ºC~1200 ºC;
e. a time of the solid-phase thermal reaction is 3 h~12; and
f. a heating rate of the solid-phase thermal reaction is 1 ºC/min~5 ºC/min.

10. The method according to any one of claims 5-9, satisfying at least one of conditions a~k below:
a. the pre-lithiated silicon oxygen material is a pre-lithiated carbon-coated silicon oxygen material;
b. the pre-lithiated carbon-coated silicon oxygen material is obtained by reaction of the carbon-coated silicon oxygen material with a lithium source;
c. the silicon oxygen material is SiOₙ, where 0.5≤n≤1.5;
d. an average particle size (D₅₀) of the silicon oxygen material is 2.0 µm-15.0 µm;
e. a thickness of a carbon layer on a surface of the carbon-coated silicon oxygen material is 30 nm~500 nm;
f. the lithium source comprises at least one of elemental lithium or a lithium-containing compound;
g. the lithium source comprises at least one of lithium hydride, lithium alkyl, lithium metal, lithium aluminum hydride, lithium amide, and lithium borohydride;
h. a reaction temperature of the carbon-coated silicon oxygen material and the lithium source is 150 ºC~300 ºC;
i. a reaction time of the carbon-coated silicon oxygen material and the lithium source is 2.0 h~6.0 h;
j. a mass ratio of the carbon-coated silicon oxygen material to the lithium source is 1 :(0.01 -0.20); and
k. a mass percentage content of lithium in the pre-lithiated carbon-coated silicon oxygen material is 3 wt%~20 wt%.

11. The method according to any one of claims 5-9, wherein before performing the surface etching treatment on the pre-lithiated silicon oxygen material, the method further comprises:
making the silicon oxygen material react with a lithium source to obtain the pre-lithiated silicon oxygen material; or
making a carbon-coated silicon oxygen material react with a lithium source to obtain a pre-lithiated carbon-coated silicon oxygen material.

12. The method according to any one of claims 5-9, satisfying at least one of conditions a~c below:
a. an acid solution used in the surface etching treatment has a following characteristic: when the pre-lithiated silicon oxygen material is subjected to the surface etching treatment, pH of a reaction system for surface etching is maintained to be less than 7;
b. an acid solution used in the surface etching treatment comprises at least one of hydrochloric acid, acetic acid, nitric acid, citric acid, oxalic acid, sulfuric acid, formic acid, phenol, phosphoric acid, hydride phosphate, hydroiodic acid, hydrobromic acid, ethylene diamine tetraacetic acid, glycolic acid, gluconic acid, and succinic acid; and
c. a time of the surface etching treatment is 0.5 h~10.0 h.

13. A lithium ion battery, **characterized in that** the lithium ion battery contains the negative electrode material according to any one of claims 1-4 or the negative electrode material prepared by the preparation method of a negative electrode material according to any one of claims 5-12.
